Europäisches Patentamt

(19) European Patent Office

Office européen des brevets

(11) EP 0 962 745 A1

(12) EUROPEAN PATENT APPLICATION
published in accordance with Art. 158(3) EPC

(43) Date of publication:
08.12.1999 Bulletin 1999/49

(51) Int. Cl.⁶: G01B 11/24, B24B 17/06

(21) Application number: 98944244.7

(86) International application number:
PCT/JP98/04313

(22) Date of filing: 25.09.1998

(87) International publication number:
WO 99/17076 (08.04.1999 Gazette 1999/14)

(84) Designated Contracting States:
CH DE FR GB GR IT LI

(30) Priority: 30.09.1997 JP 28106697

(71) Applicants:
• PETIO CO., LTD.
  Tokyo 160-0022 (JP)
• Kawamoto, Meitetsu
  Nakano-ku, Tokyo 165-0023 (JP)

(72) Inventor: KAWAMOTO, Meitetsu
  Nakano-ku, Tokyo 165-0023 (JP)

(74) Representative:
Leson, Thomas Johannes Alois, Dipl.-Ing.
Patentanwälte
Tiedtke-Bühling-Kinne & Partner,
Bavariaring 4
80336 München (DE)

(54) THREE-DIMENSIONAL SHAPE MEASUREMENT DEVICE AND THREE-DIMENSIONAL ENGRAVER USING THE MEASUREMENT DEVICE

(57) The purpose of this invention is to provide with a three-dimensional measuring apparatus which is easily applied for commercial applications in terms of cost and operation, and which can complement a missing three-dimensional shape portion which has a border to the background, such as the hair portion of a human profile. The detection head (102 in Fig. 1) measures a three-dimensional shape of an object to be measured (101) such as a human profile which is placed near to a backboard (201 in Fig. 2). The shape calculation portion (110 in Fig.1) derives from measured three-dimensional object shape data a missing area which consists of pixels having invalid value data, and which is surrounded by a background area consisting of pixels having background data corresponding to said backboard (201) and which is surrounded by a valid measured object area consisting of pixels having valid data of said object to be measured (101), and complements pixels composing said derived missing area. As a result, the missing area in the human hair portion and the like as a part of the object to be measured (101) can be restored.

Fig. 1

EP 0 962 745 A1

## Description

### TECHNOLOGY AREA

This invention is related to technology for obtaining three-dimensional shape information from measured image data of an object to be measured.

### BACKGROUND OF THE INVENTION

Technologies for obtaining three-dimensional shape information from measured image data of an object to be measured are widely applied to various industrial purposes. One typical application example of such technologies is a three-dimensional sculpturing system which enables carving a human profile and the like on precious metal medals, emblems or woodcrafts by controlling a three-dimensional carving machine according to three-dimensional data calculated from measured image data of the human profile and the like. Various kinds of three-dimensional shape measuring systems have been realized for such commercial applications.

A typical example of such conventional three-dimensional object shape measuring systems is such that a slit laser ray from a laser light source is applied on the object to obtain image data of the object and the three-dimensional object shape is calculated from obtained image data and the slit laser ray angle.

In realizing such a three-dimensional shape measuring system mentioned above, the most important issue is how to reproduce the three-dimensional shape of the measured object precisely, according to its application purpose.

In conventional non-touch type three-dimensional shape measuring systems using a slit laser ray, however, three-dimensional shape information is liable to be dropped for some areas such as the hair portion of a human profile. This is because human hairs hardly reflect the slit laser ray so that it becomes difficult to reproduce the three-dimensional shape of the hair portion.

For this reason, a problem will arise when such a conventional three-dimensional shape measuring technology is applied to a medal sculpturing system which carves a human profile or the like on the medal, that a large number of commercially valueless medals would be produced which have a sculptured human profile with an unnaturally flat hair portion.

Although it may be possible to realize a three-dimensional shape measuring system which can reproduce precisely the three-dimensional shape of the hair portion of a human profile and the like, it will actually impose many conditions on the object to be measured from the aspects of sensor sensitivity, light source adjustment and measurement time, or otherwise, it requires a very accurate sensor. These factors will lead to a commercially unsuccessful measuring system in terms of cost and operation.

The purpose of this invention is to enable three-dimensional shape measurement which is easily applied for commercial applications in terms of cost and operation, and which can complement a missing three-dimensional shape portion which has a border to the background, such as a human profile.

### SUMMARY OF THE INVENTION

This invention is basically related to a three-dimensional measuring apparatus which has the functionality of measuring a three dimensional object shape. Various methods for realizing the three dimensional shape measuring functionality, such as a method using two slit laser rays from left side and right side of the object, a method using single laser ray, or a conventional method which does not use laser rays, can be utilized for the purpose of the invention.

The first embodiment of the invention is composed of following two components; (1) a background border obtaining unit (in a shape calculation portion) which obtains background border information (upper contour pixel information) or information showing the border between the object to be measured and the background of the object, from three-dimensional shape data of the object to be measured, and (2) an Interpolation calculation unit (in the shape calculation portion). For example, said background border obtaining unit derives said upper contour pixel information from three-dimensional shape data measured for the object and for a backboard as the background at the same time. In this case, said upper contour pixel information represents the background border between the background area which consists of pixel data for the backboard, and a background border missing area which consists of invalid pixel data. In another example wherein a backboard is not used, said background border obtaining unit obtains contour information of the valid measured object area which consists of valid pixel data, from measured three-dimensional shape data of the object without a backboard. The derived background border information contains the contour information of the background border missing area. In this case, the contour portion in the background border missing area can be recovered by using a curve approximation method or the like, or otherwise can be selected from many prestored contour examples.

Said interpolation calculation unit complements the missing portion of the measured object information in three-dimensional shape data, from the derived background border information.

The second embodiment of the invention is composed of following three components; (1) a measuring unit which includes a detection head, an image encoder, a scanner driver and a personal computer, (2) a background border missing area deriving unit (in the shape calculation portion), and (3) a background border missing area interpolation calculation unit (in the shape calculation portion). Said measuring unit measures the three-dimensional shape of the object to be measured, together with the three-dimensional shape of a backboard which has such characteristics that its three-dimensional shape can be measured. At this measurement, the object to be measured should be placed near enough to the backboard. From measured three-dimensional object shape data, said background border missing area deriving unit derives a background border missing area which consists of pixels having invalid value data, and which is surrounded by a background area consisting of pixels having background data corresponding to said backboard and by a valid measured object area consisting of pixels having valid data of said object to be measured. Said background border missing area interpolation calculation unit complements pixels composing said background border missing area, from pixels composing the background area that surrounds said background border missing area and from pixels composing said valid measured object area that surrounds said background border missing area.

The third embodiment of the invention is realized as a three-dimensional sculpturing apparatus containing a control unit. Here, said control unit controls a sculpturing unit according to three-dimensional shape data including complemented pixel data for the background border missing area or for a hole-shaped missing area, said three-dimensional shape data being fed from the three-dimensional shape measuring apparatus of the second embodiment of the invention.

Through each embodiment of the invention described above, the border information or the contour information between the human profile and the like to be measured and the background region can be derived precisely. And also the missing three-dimensional shape of the human hair portion and the like that has a border to the background can be complemented based on the derived border information or the contour information.

More specifically, it becomes possible to derive easily the background border missing area that consists of pixels having invalid data, by measuring the three-dimensional shape of an object to be measured such as a human profile and the like together with a backboard which is placed behind said object and which can reflect a slit laser ray. Here, said background border missing area is surrounded by the background area having background pixel data for the backboard and by the valid measured object area having valid pixel data for the object to be measured. Consequently, easy interpolation of pixels composing the derived background border missing area becomes possible.

It becomes thus possible to obtain natural carving results on a precious metal medal or the like for the object to be measured such as a human profile or the like, when such three-dimensional data complementd as mentioned above are applied to a three dimensional sculpturing apparatus system.

This invention can be embodied also as a content of a computer readable recording medium, which enables realization of the same functionality of the apparatus described above, by a computer.

## DESCRIPTION OF DRAWINGS

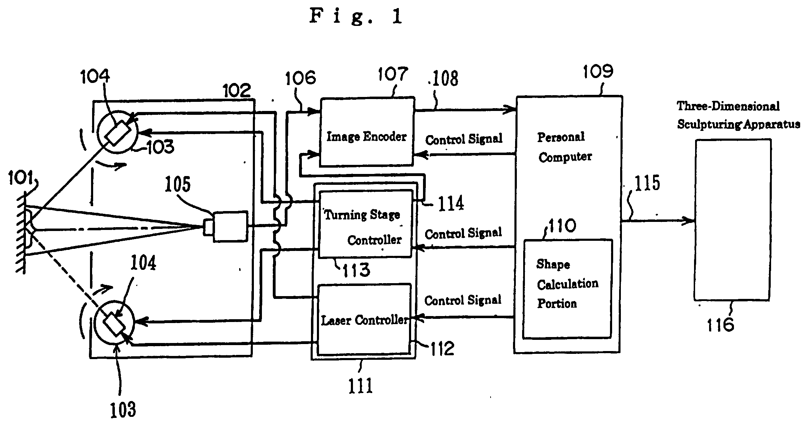

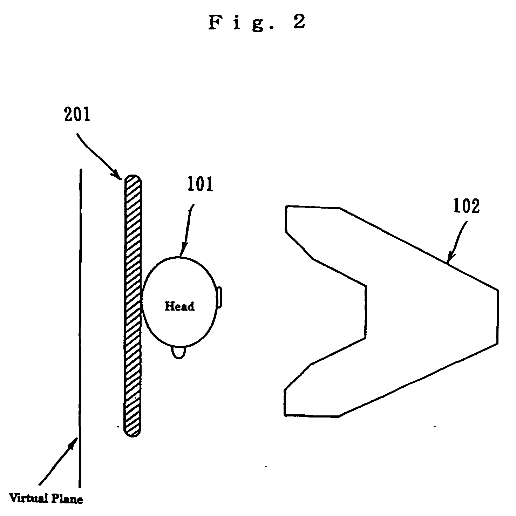

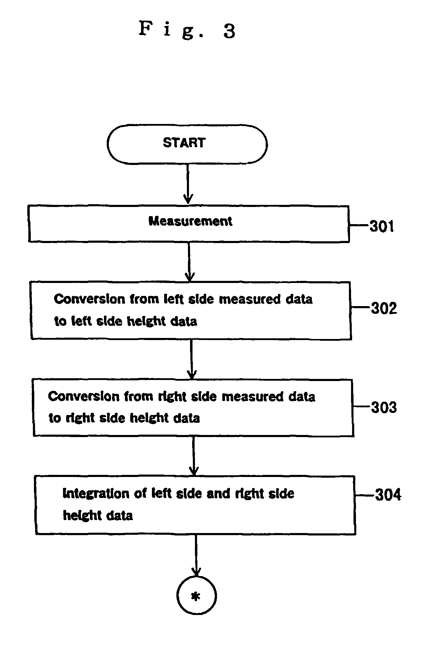

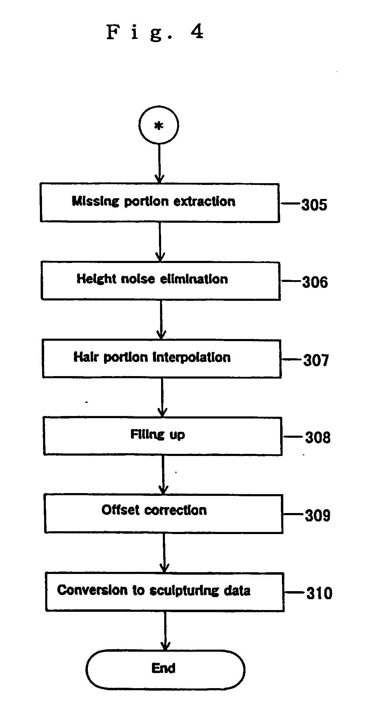

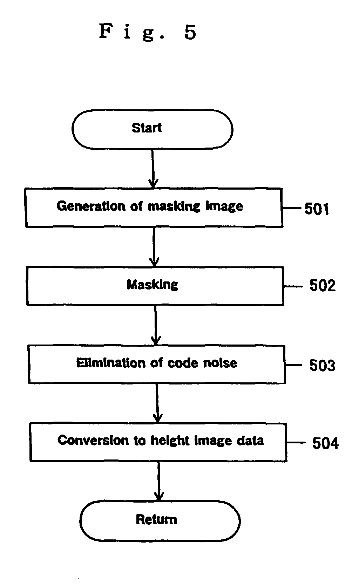

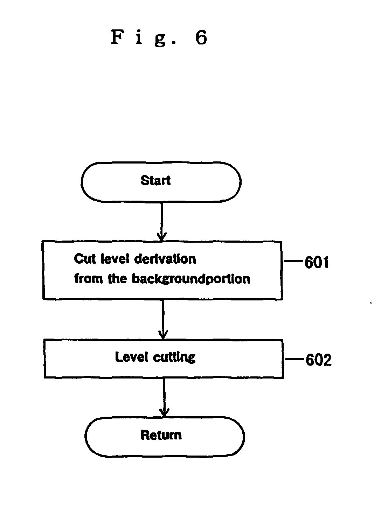

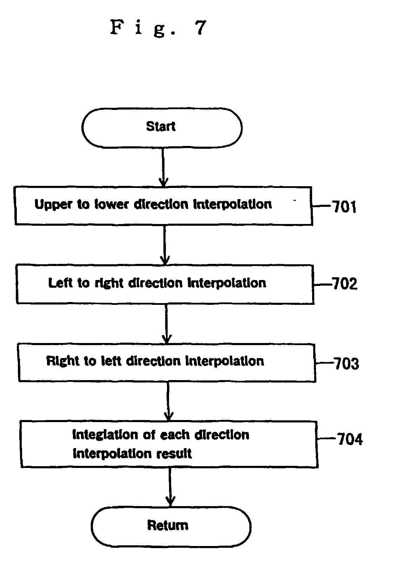

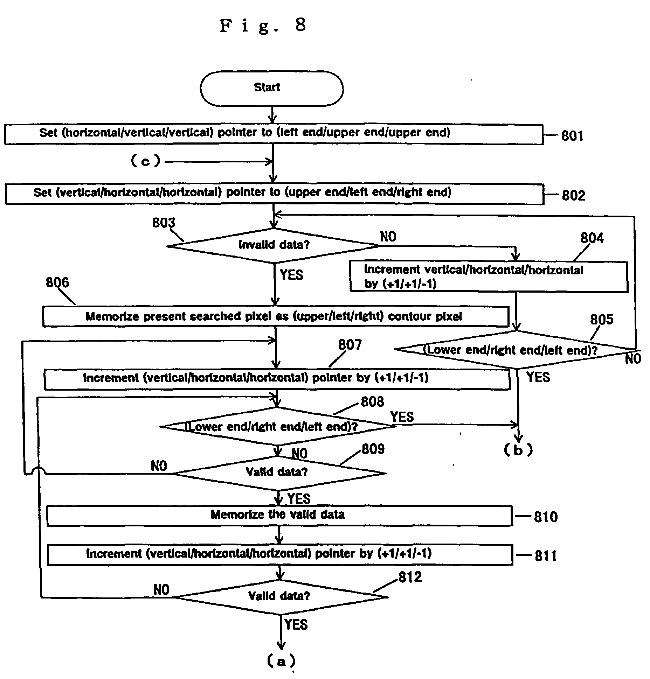

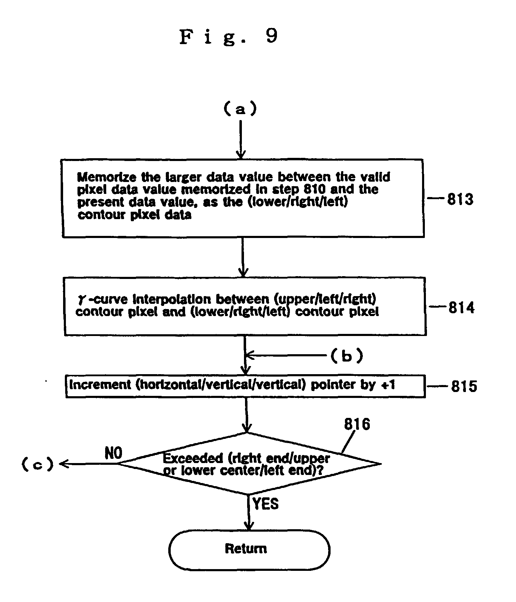

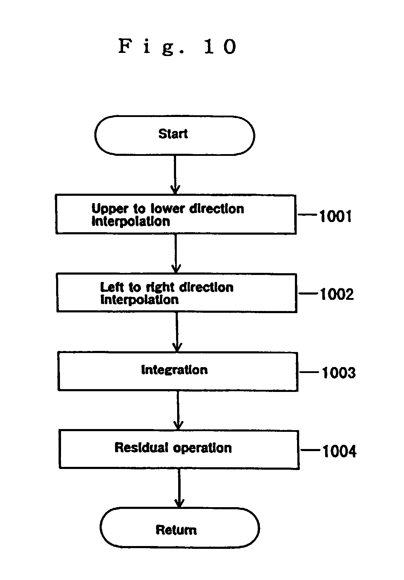

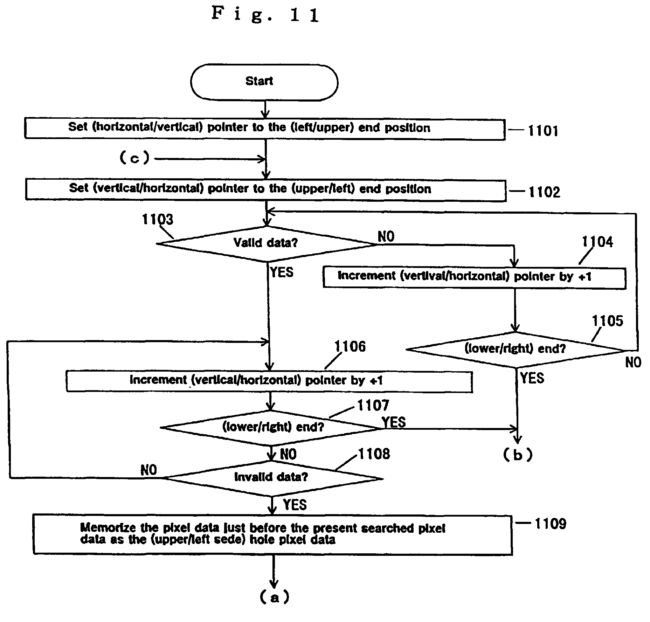

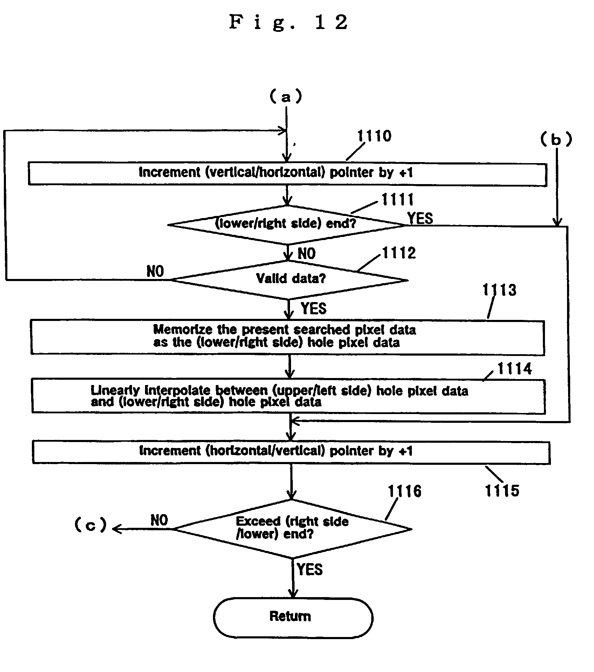

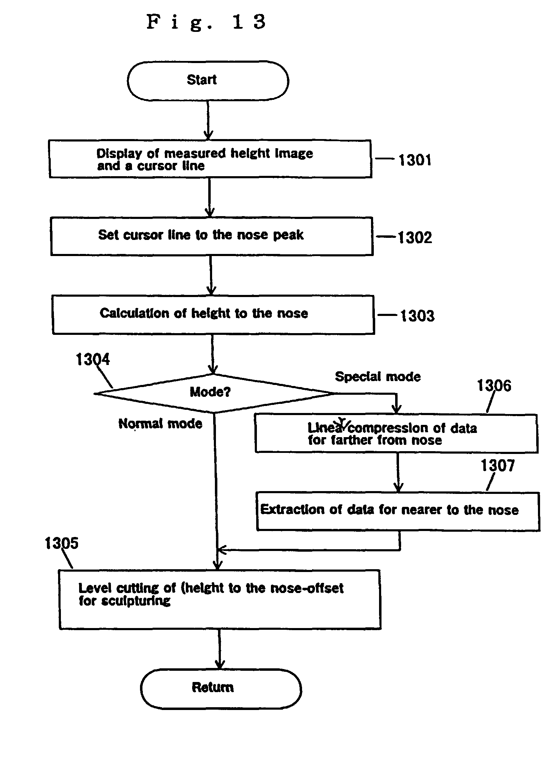

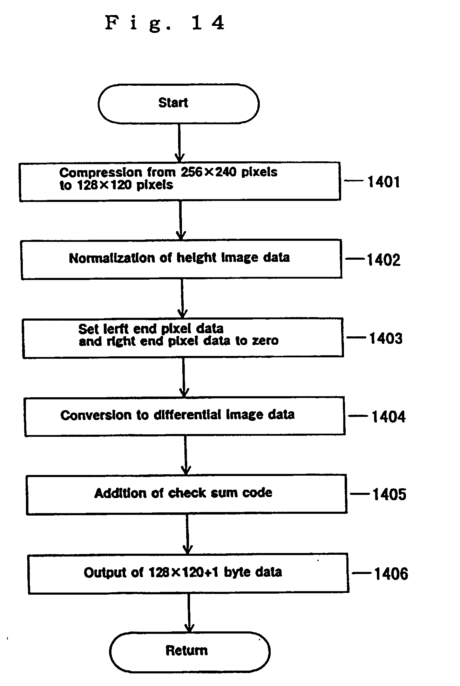

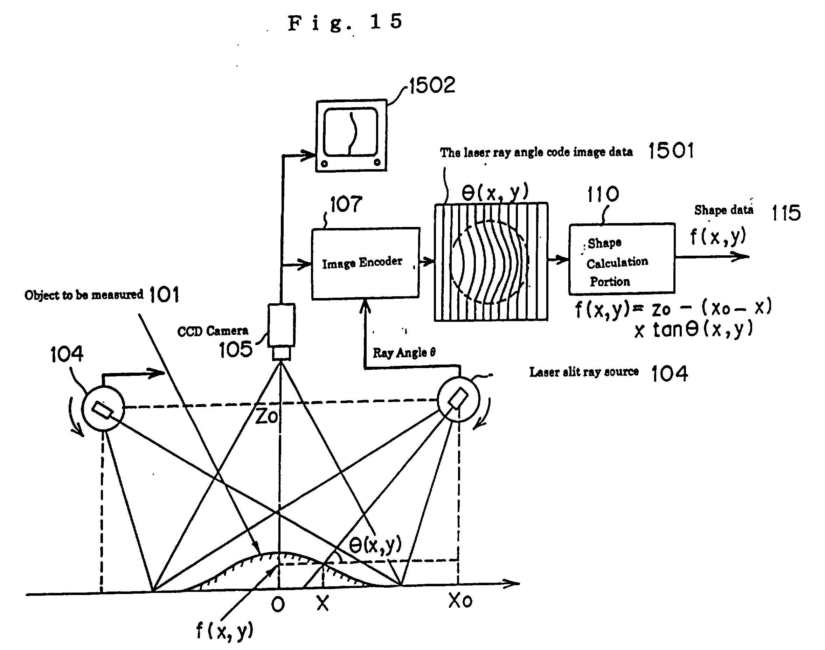

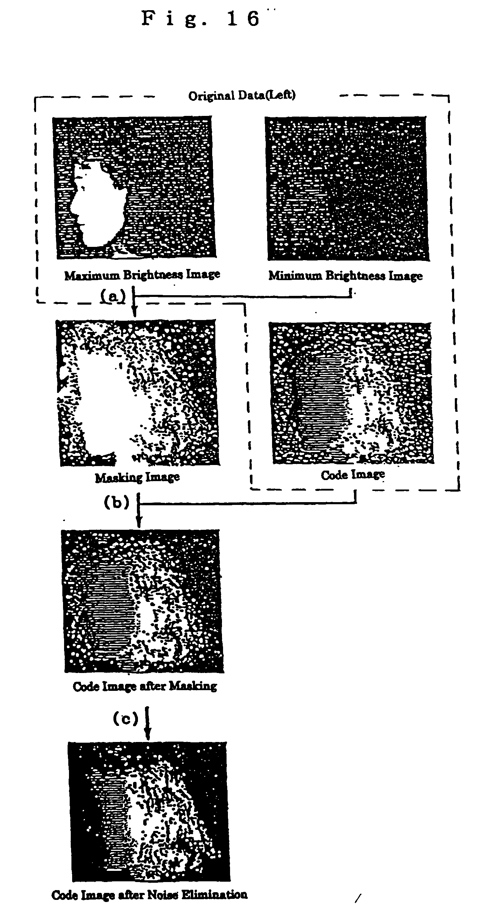

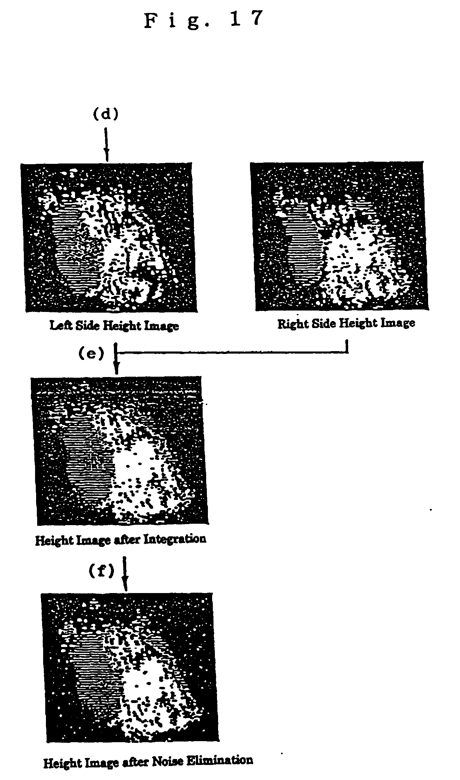

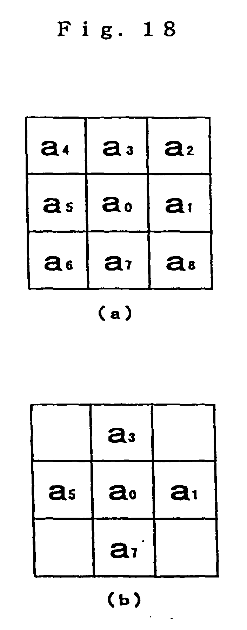

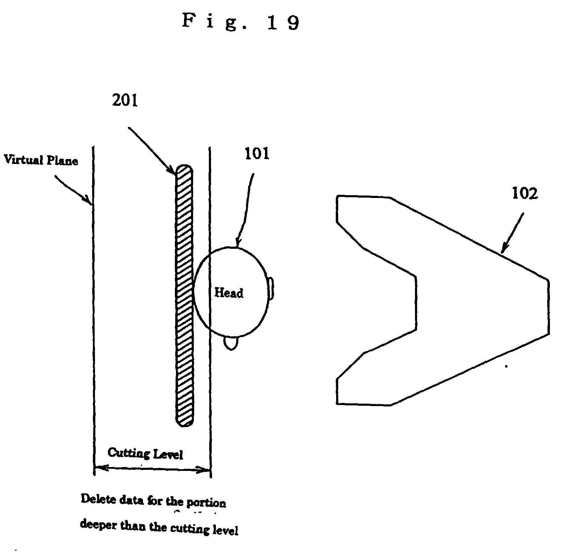

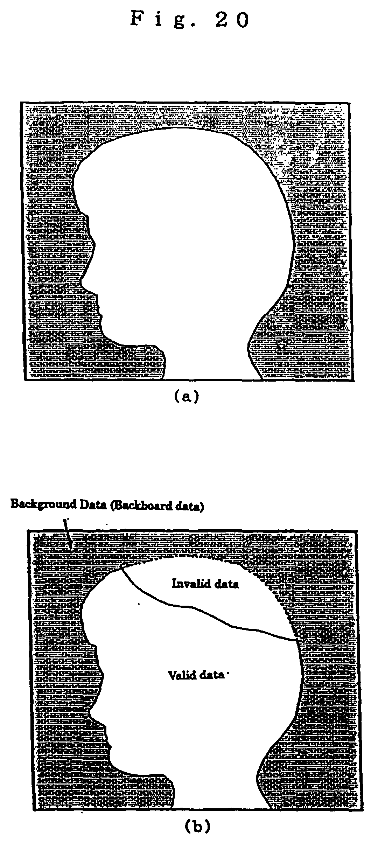

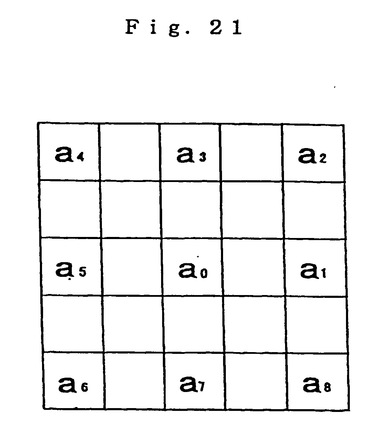

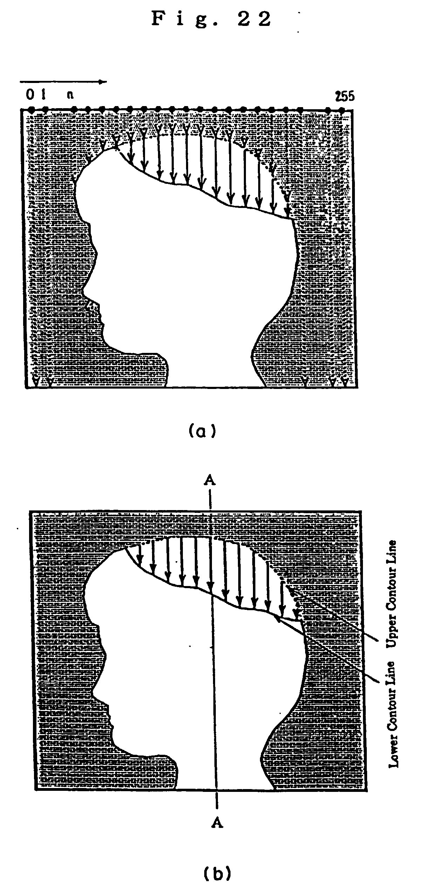

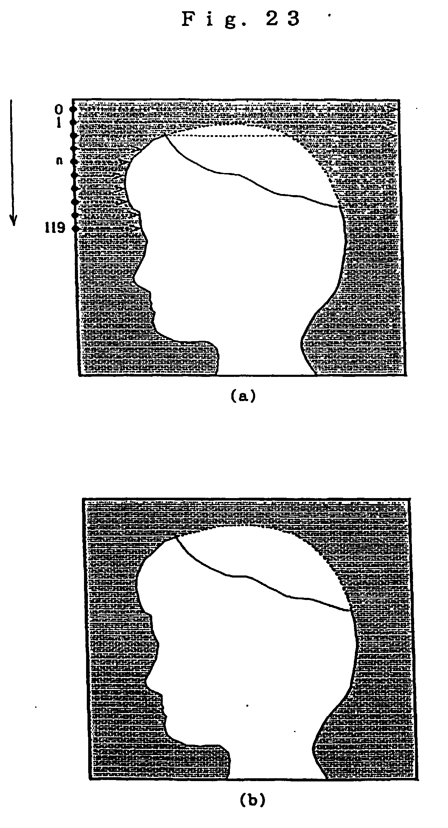

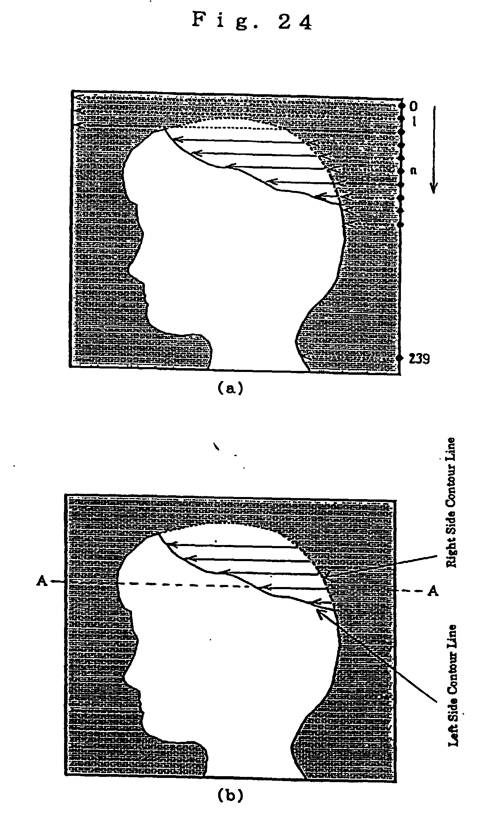

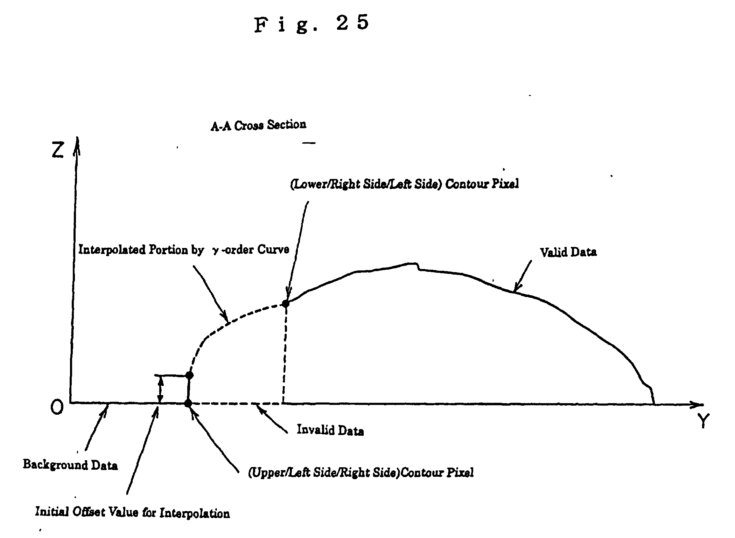

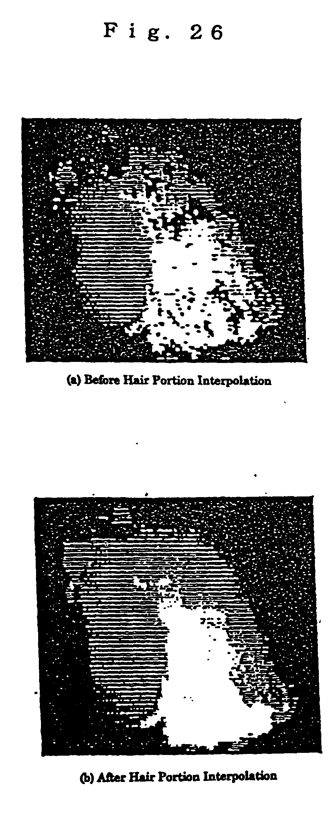

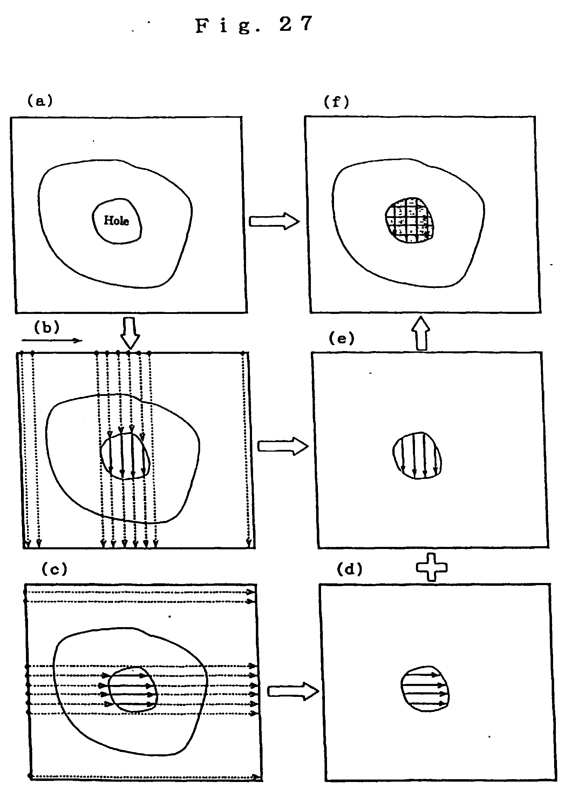

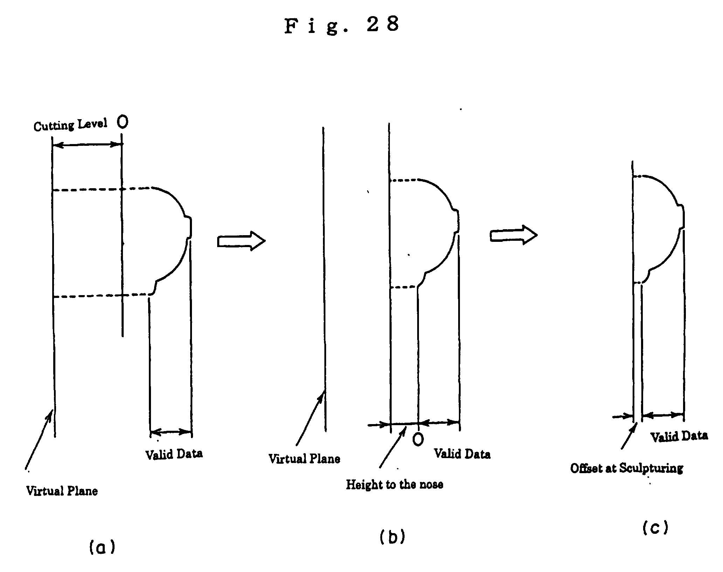

**Figure 1** shows the structure of the three-dimensional shape measuring system and the three-dimensional shape sculpturing system, as the embodiment of this invention. **Figure 2** is a figure to show the image of measurement in the embodiment of this invention. **Figure 3** is Part 1 of the whole operation flow chart for the embodiment of this invention. **Figure 4** is Part 2 of the whole operation flow chart for the embodiment of this invention. **Figure 5** depicts the operation flow chart of the conversion from left side and right side measured data to left side and right side height image data. **Figure 6** is the operation flow chart of derivation process for the missing area. **Figure 7** is the operation flow chart of the interpolation process for the hair portion. **Figure 8** is Part 1 of the operation flow chart of the interpolation process for each direction in the hair portion interpolation. **Figure 9** is Part 2 of the operation flow chart of the interpolation process for each direction in the hair portion interpolation. **Figure 10** shows the operation flow chart for the filling up process. **Figure 11** is Part 1 of the operation flow chart of interpolation process for each direction in the filling up process. **Figure 12** is Part 2 of the operation flowchart of interpolation process for each direction in the filling up process. **Figure 13** is the operation flow chart of the offset correction process. **Figure 14** is the operation flow chart of the process for data conversion to the sculpturing data. **Figure 15** explains the principle of the three-dimensional shape measurement. **Figure 16** is Part 1 of the explanation for effects of the embodiment of this invention. **Figure 17** is Part 2 of the explanation for effects of the embodiment of this invention. **Figure 18** shows the structure of a spatial filter which is used for the code noise elimination process. **Figure 19** is Part 1 of the explanation for the missing portion derivation process. **Figure 20** is Part 2 of the explanation for the missing portion derivation process. **Figure 21** is the structure of a spatial filter which is used for the height noise elimination process. **Figure 22** explains the operation of the hair portion interpolation process (the upper to lower interpolation process). **Figure 23** explains the operation of the hair portion interpolation process (the left to right interpolation process). **Figure 24** is the explanation of the operation for the hair portion interpolation process (the right to left interpolation process). **Figure 25** shows the explanation of the interpolation calculation using a γ-order curve. **Figure 26** shows the effect of the hair portion interpolation process. **Figure 27** is the explanation of the filling up process. **Figure 28** is the explanation of the offset correction process.

### DESCRIPTION OF THE PREFERRED EMBODIMENT

The preferred embodiment of the invention will be explained hereinafter referring to drawings.

〈*Feature of the Invention*〉

The feature of this invention is summarized as; the border information between the human profile and the like to be measured and the background region can be derived precisely, by measuring the three-dimensional shape of an object to be measured such as a human profile together with a backboard which is placed behind said object and which can reflect a slit laser ray, and the missing three-dimensional shape of the human hair portion that has a border to the background can be complemented based on the derived border information.

〈*Configuration of the Embodiment of the Invention*〉

Figure 1 is the structure of the three-dimensional shape measuring system and the three-dimensional shape sculpturing system, as the embodiment of this invention.

As are shown in Figure 1, the three-dimensional shape measuring system mainly consists of a detection head 102, a scanner driver 111, an image encoder 107 and a personal computer 109 which contains shape calculation portion 110.

In the detection head 102, two slit laser my sources 104 are placed in front of, and slant to, the surface of the object to be measured. Slit laser rays are scanned and applied to the object to be measured 101, and images of the object at each scanning position are taken by a CCD camera 105. Two slit laser ray sources 104 are set on turning stages 103, respectively, at both sides of the CCD camera 105, in order to reduce the value of the dead angle at the measurement.

The scanner driver 111 consists of a turning stage controller 113 and a laser controller 112. The turning stage controller 113 controls scanning of two slit laser rays from the slit laser my sources 104, by controlling turning of the turning stages where the slit laser ray sources are mounted, according to the control signal from the personal computer 109. The laser controller 102 controls each application timing of the two slit laser rays from the slit laser ray sources 104.

The image encoder 107 composes the laser ray angle code image, the maximum brightness image and the minimum brightness image by processing the video signal 106 which is obtained as the output from the CCD camera 105, and feeds each image data to the personal computer 109 as composed image data 108.

The personal computer 109 controls the image encoder 107 and the scanner driver 111. After the measurement, shape calculation portion 110 in the personal computer calculates the three-dimensional shape of the object to be measured 101, according to composed image data 108 (laser ray angle code data, maximum brightness data and minimum brightness data) from the image encoder 107.

Shape data 115 from the shape calculation portion 110 are applied to the three-dimensional sculpturing apparatus 116. The three-dimensional sculpturing apparatus 116 sculptures the three-dimensional image of the object to be measured 101 which is actually a human profile, on precious metal medals.

〈*Explanation of Backboard 201*〉

Figure 2 is a plane figure looking from upside of the object to be measured 101, showing the image of the three-dimensional measurement. The object to be measured 101 in this embodiment of the invention is a human profile. In this measurement, the position of the object to be measured 101 is determined as it leans to a backboard 201 which is painted in black, for example, in order to reflect the slit laser ray easily. The detection head 102 carries out the above-mentioned measurement procedure for the human profile together with the backboard 201.

Since the height information of the human profile in reference to the virtual flat plane of the backboard 201 can be obtained continuously by the measurement procedure, it becomes possible to derive the human profile contour information precisely. Consequently, by using the derived contour information, it becomes possible to complement the missing portion of the three-dimensional human hair portion having its shape border on the backboard, as will be explained later.

〈*Three-dimensional Measurement Process of the Embodiment of the Invention*〉

Figures 3 and 4 show the whole process flow charts of the embodiment of the invention.

#### Measurement Process

Measurement by the detection head 102 is carried out first (Step 302 in Fig. 3). The principle of the three-dimensional measurement of the embodiment of the invention is illustrated in Fig. 15. In this measurement, a slit laser ray is applied to the object to be measured 101 from the slit laser ray source 104 (the left side laser slit ray source 104) which is placed at the left side of the detection head 102. The left side laser slit ray scans the whole surface of the object to be measured 101.

As is shown in Fig. 15, the image taken by the CCD Camera 105 at each scanning position is supplied to a monitor 1502 as a video signal 106, in order for the monitor to display the image. The video signal 105 is also supplied to the image encoder 107.

The image encoder 107 carries out the following process on the video signal 105 that is supplied from the CCD camera 105. The brightness change of each surface position of the object to be measured 101 is checked in real time, and the timing when the surface position becomes the brightest by the applied laser slit ray is detected. The turning angle signal 114 is supplied to the image encoder from the turning stage controller 113 by using this timing, and is used to compose ray angle code image data 1501 which consist of slit laser ray angle values $\theta(x, y)$ at each surface portion. Ray angle code image data are stored in an image memory in the image encoder 107 as left side measurement data, although the memory is not depicted in the figure.

At the same time, the image encoder 107 calculates maximum brightness image data and minimum brightness image data, which are obtained from recorded data at timings when the object surface becomes the brightest and the darkest, respectively, for each surface portion of the object to be measured 101. These data are stored as left side measured data also, into said image memory that is not shown in the figure.

After finishing the slit laser ray scan from the left side slit laser ray source, a slit laser ray is applied to the object to be measured 101 from the slit laser ray source 104 (the right side laser slit ray source 104) which is placed at the right side of the detection head 102, just as the same manner. The right side slit laser ray scans the whole surface of the object to be measured 101. By carrying out this procedure, another set of laser ray angle code image data 1501, maximum brightness image data and minimum brightness image data are stored in the image memory in the image encoder 107, as the right side measured data.

Conversion and Integration Processes from Left side and Right side Measured Data to Height Image Data

When the above-described measurement procedure is finished, the shape calculation portion 110 takes left side measured data from the image memory (although it is not shown in the figure) in the image encoder 107. The shape calculation portion is actually realized as CPU operation in the personal computer 109 according to control program stored in a disc unit which is not shown in the figure. From left side measured data, the shape calculation portion calculates left side height image data which show the half side shape of the object to be measured 101 (the profile), lighted by the left side slit laser ray from the left side laser slit ray source 104 (step 302 in Figure 3). Then, shape calculation portion 110 takes tight side measured data from the image memory in the image encoder 107, and calculates right side height image data which show the other half side shape of the object to be measured 101, lighted by the right side slit laser ray from the right side slit laser ray source 104 (step 303 in Figure 3). Next, the shape calculation portion 110 composes left side height image data and right side height image data in order to reduce the effect of the dead angle in measuring object shape data.

Detailed process of the conversion from left side measured data to left side height image data (step 302 in Fig. 3) will be explained in the following. Figure 5 is a flow chart to show the detailed operation of step 302 (and step 303) in Fig. 3. The operation is explained by using Fig.16 and Fig. 17.

Firstly, the shape calculation portion 110 carries out the masking image generating process (step 501 in Fig. 5). This masking image is required for masking the unnecessary portion in ray angle code image data where corresponds to the area that is not lighted by the slit laser ray, in order to obtain only data for the valid area.

A differential image which shows the brightness lighted by the slit laser ray can be obtained by subtracting the minimum brightness image from the maximum brightness image. The shape calculation portion 110 uses this principle to generate masking image data. That is, the shape calculation portion 110 takes maximum brightness image data and minimum brightness image data which are both contained in left side measured data stored in the image memory of the image encoder 107, and calculates differential image data by subtracting minimum brightness image data from maximum brightness image data for each pixel. Then, obtained differential image data are converted into binary data, that is, masking image data, which take a value "1" for a pixel which corresponds to the slit laser ray lighted portion, and "0" for a pixel which corresponds to the portion not lighted by the slit laser ray.

The shape calculation portion 110 then takes from the image memory of the image encoder 107, laser ray angle code image data 1501 which are a part of left side measured data, and carries out masking of unnecessary data for said laser ray angle code image data, by using generated mask image data (step 502 in Fig. 5).

More specifically, the shape calculation portion 110 leaves the data value of laser ray angle code data 1501 corresponding to each pixel unchanged, if the value of mask image data for that pixel is "1". Also, the shape calculation portion 110 changes the data value of laser ray angle code data 1501 corresponding to each pixel to "0", if the value of mask image data for that pixel is "0".

As the result of above masking process, data for the area which is not lighted by the slit laser my is eliminated, and only data for the valid area can be obtained in the laser ray angle code image as shown in Fig. 16(b).

Next, the shape calculation portion 110 carries out the code noise elimination process for the laser ray angle code image on which the masking process is already applied (step 503 in Fig. 5). In this process, the continuity of the laser ray angle in the masked laser ray angle code image is checked, and by doing this, the noisy area where the slit laser ray did not lighted is eliminated, as shown in Fig. 16(c).

Specifically, the shape calculation portion 110 carries out the first code noise elimination process on the ray angle code image after masking process by using a 3 pixel x 3 pixel spatial filter as is shown in Fig. 18(a). More specifically, the shape calculation portion 110 carries out a decision process to check the continuity of the ray angle $\theta(x, y)$, by overlapping the center position $a_0$ of the 3 pixel x 3 pixel spatial filter shown in Fig. 18(a) on ray angle code image data 1501 for each pixel position. This process is further explained as the following.

At overlapping the center position $a_0$ of the 3 pixel x 3 pixel spatial filter shown in Fig. 18(a) on ray angle code image data 1501 for each pixel position, shape calculation portion 110 decides whether ray angle code image data 1501 corresponding to the center position $a_0$ satisfy the following equation in relation to ray angle code image data at each pixel position $a_1$ to $a_8$. Here $a_1$ to $a_8$ are eight neighboring positions to the central position of the spatial filter. Symbols $a_0$ and $a_n$ ($1 \leq n \leq 8$) in the equation (1) express the value of ray angle code image data 1501 (that is, ray angle $\theta(x, y)$), corresponding to each position $a_0$ to $a_8$ of the spatial filter in Fig. 18(a), respectively.

$$|a_0 - a_n| \leq T_1 \ (1 \leq n \leq 8) \qquad (1)$$

Here, T1 is the first decision threshold value.

If the number of ray angle code image pixels corresponding to $a_n$ which satisfy equation (1) is larger than T2 pixels according to equation (1), then the shape calculation portion 110 leaves ray angle code image data 1501 corresponding to the center position $a_0$ of the spatial filter as they are, and otherwise sets said ray angle code image data 1501 corresponding to the center position $a_0$ of the spatial filter to the value of -32768. Here, T2 is the second decision threshold value.

By the first code noise elimination process explained above, almost all portions of the noisy area where the slit laser ray has not lighted are eliminated.

Next, the shape calculation portion 110 carries out the second code noise elimination process for the ray angle code image that has already passed the first code noise elimination process, by using the 3 pixel x 3 pixel spatial filter shown in Fig. 8(b). More specifically, the shape calculation portion 110 eliminates isolated pixels according to the following process, by overlapping the center position $a_0$ of said spatial filter on said ray angle code image data 1501 for each pixel position.

At each time when shape calculation portion 110 overlaps the center position $a_0$ of said 3 pixel x 3 pixel spatial filter shown in Fig. 18(b) on said ray angle code image data 1501 for each pixel position, the shape calculation portion decides whether ray angle code image data 1501 for each pixel position corresponding to four neighboring position around $a_0$ (that is, $a_1$, $a_3$, $a_5$ and $a_7$) are valid ones having values larger than 0 or not.

The shape calculation portion 110 leaves said ray angle code image data 1501 corresponding to the center position $a_0$ of said spatial filter as they are, if the number of valid data pixels exceeds T3 through the above decision process. Otherwise, the shape calculation portion 110 sets said ray angle code image data 1501 corresponding to the center position $a_0$ of said spatial filter to 32768, which means that they are invalid data. Here T3 is the third decision threshold value. Through this second noise elimination process, isolated pixels which exist in the area where slit laser rays have not lighted are eliminated.

As the next step, data conversion from ray angle code image data 1501 which have passed the first and the second noise elimination processes (and which are left side measured data) to the left side height image data is carried out as shown in Fig. 17(d). This process is shown in Fig. 5 as step 504.

More specifically, the shape calculation portion 110 calculates the following equation by using the left side slit laser ray angle $\theta(x, y)$ [see Fig. 15] for each surface portion of the object to be measured 101, which consist of ray angle code image data 1501 after code noise elimination processes. By doing this, left side height image data $f(x, y)$, which show the half side figure (the profile) of the object to be measured 101 corresponding to the left side slit laser ray, can be obtained.

$$f(x, y) = z_0 - (x_0 - x) \tan\{\theta(x, y)\} \qquad (2)$$

Here, $x_0$ is the x coordinate value of the rotation center of the slit laser ray source 104, and $Z_0$ is the distance between the focal point of the CCD camera 105 and the object to be measured 101.

As described above, through step 302 in Fig. 3 which consists of series of steps 501 to 504 in Fig. 5, conversion from left side measured data to left side height image data is realized. Left side height measured data are outputs as two bite integer numbers with signs, having decimal values between -32678 and +32767. The missing area which will be explained later will have the invalid value of -32768.

Next, the shape calculation portion 110 executes similar conversion procedures as those explained above to obtain left side height image data from left side measured data, in order to obtain right side height image data. That is, the shape calculation portion 110 takes right side measured data from the image memory in the image encoder 107, and carries out procedure described as step 303 in Fig. 3, which consists of procedure series of step 501 to 504 in Fig. 5, on the highest brightness image data, the lowest brightness image data and ray angle image data 1501.

Then; the shape calculation portion 110 integrates left side height image data obtained through step 302 and right side height image data obtained through step 303, as shown in Fig. 17 (e) (step 304 in Fig. 3). The purpose of this integration is to reduce the effect of the dead angle in height image data. This is done by overlapping and combining valid areas of left side height image data and right side height image data, which complement each other to reduce the effect of the laser ray dead angle for the object image.

Specifically, shape calculation portion 110 compares left side height image data and right side height image data for each pixel position, selects smaller values (that is, data for smaller height) and outputs them as resultant height image data. If either left side height image data or right side height image data for each pixel position are invalid data having the value of -32768, the shape calculation portion 110 selects remaining valid height image data as the output.

## Missing Portion Extracting Process

After the composition of height image data as step 304 in Fig. 3, a process to extract a missing area is carried out (step 305 in Fig. 4). As previously explained in *BACKGROUND OF THE INVENTION*, among height image data obtained through above procedures, information for the human hair portion tends to be missed, since the human hair portion hardly reflects the slit laser ray. It is not practical, however, to increase detection accuracy for such a portion, If the increase in cost and in operation complexity is considered. Instead, the embodiment of this invention can eliminate the unnatural appearance of the image, by detecting and complementing such a missing area.

Since an area which does not reflect the slit laser ray produces invalid data having the value of -32768, such an area (a missing area) can be extracted by detecting these invalid data. If the background of the object to be measured 101 is empty, however, data for such background also become invalid data. For this reason, whether such invalid data are for the missing area or for the background area cannot be distinguished by simple detection of invalid data, when the human hair portion having a border to the background is missed.

In order to solve this problem, in the embodiment of this invention, a person as the object to be measured 101 in Fig. 2 is situated leaning against a backboard 201 which is painted black, for example, so that it can reflect the slit laser ray, and the detection head 102 measures not only the human profile but also the backboard 201 at the same time. As the height information for the human profile in reference to the virtual plane of the backboard 201 can be always obtained through this measurement procedure, it becomes possible to derive the contour information of the human profile accurately. Thus the missing portion of the three dimensional shape for the human profile that has a neighboring border to the background can be interpolated based on said derived contour information. This is a major feature of this invention.

Figure 6 is a flow chart to explain the detailed derivation process for the missing portion shown as step 305 in Fig. 4. Figures 19 and 20 show the explanation of the process.

As shown in Fig. 19, the shape calculation portion 110 first assumes that the height image data value corresponding to the upper left corner among height image data after integration by step 304 in Fig. 3 is the height value of the backboard 201 from the virtual plane. The shape calculation portion 110 then determines a cutting level by adding a prescribed offset value to said height image data value (step 601 in Fig. 6).

Next, the shape calculation portion 110 carries out the level cutting process (step 602 in Fig. 6). This process is characterized as the following; said cutting level is subtracted from height image data for each pixel which passed the integration process of step 304 in Fig. 3, and all of resultant height image data having values less than zero are set to the invalid data having the value of -32768. Resultant data after said level cutting process are stored as renewed height image data (step 602 in Fig. 6).

Since data for the background portion are changed to valid data having the value of zero by the above explained missing portion derivation process, the contour of the human profile as the object to be measured 101 can be determined clearly as shown in Fig. 20(a), and also data for only the missing portion can be set to the invalid data of -32768. Since the contour for the hair portion of the human profile that has a neighboring border to the background has the valid data value zero, the shape calculation portion 110 can interpolate the missing three-dimensional shape information of the human hair portion. This is done through the hair portion interpolation process which will be explained later, by detecting an area which has invalid data values and which is surrounded by the background area having the data value of zero and the object to be measured 101 having valid data values, as shown in Fig. 20(b).

## Height Noise Elimination Process

The shape calculation portion 110 next carries out the height noise elimination process (step 306 in Fig. 4) for height image data obtained through the level cutting process of step 305 in Fig. 4. In this process, isolated pixels are removed through the decision for the height value continuity of height image data which are obtained by the level cutting, as shown in Fig. 17 (f). Actually the shape calculating portion 110 executes filtering process on height image data obtained through said level cutting, by using a 5 pixel x 5 pixel spatial filter as is shown in Fig. 21. More specifically, shape calculation portion 110 overlaps the center position $a_0$ of the 5 pixel x 5 pixel spatial filter shown in Fig 21 on height image data for each pixel position, and carries out the following procedure for continuity decision.

The continuity is checked by using the following equation between height image data at the center position $a_0$ of said 5 pixel x 5 pixel spatial filter and height image data corresponding to neighboring eight positions $a_1$ to $a_8$ around $a_0$, at each time when height image data for each pixel position are overlapped on the center position $a_0$ of said spatial filter.

$$|a_0 - a_n| \leq T_4 \quad (1 \leq n \leq 8) \qquad (3)$$

Here T4 is the fourth decision threshold value. Also in the above equation, $a_0$ and $a_n$ $(1 \leq n \leq 8)$ show the height image data value corresponding to each pixel position $a_0$ and $a_n$ $(1 \leq n \leq 8)$ of the spatial filter shown in Fig. 21.

The shape calculation portion 110 leaves said height image data corresponding to the center position $a_0$ of said spatial filter as they are, if the number of height image pixels which satisfy equation (3) exceeds T5. Otherwise, shape calculation portion 110 sets said height image data corresponding to the center position $a_0$ of said spatial filter to the invalid value of -32768. Here, $T_5$ is the fifth decision threshold value.

## Hair Portion Interpolation Process

The shape calculation portion 110 then carries out the hair portion interpolation process on height image data of which height noises are already removed by step 306 in Fig. 4 (step 307 in Fig. 4). In this process, the shape calculation portion 110 interpolates the missing portion of the three dimensional shape of the human profile that has a border to the background. This can be done by detecting an area having invalid data and which is surrounded by the background area having the data value of zero and the area of the object to be measured having valid data values, and by interpolating said area having invalid data.

Figure 7 is a flow chart to explain the hair portion interpolation process that is shown as step 307 in Fig. 4. The shape calculation portion executes the upper to lower interpolation(step 701), the left to right interpolation(step 702), the right to left interpolation(step 703) and the integration of each direction interpolation result (step 704), in this order.

The flow chart shown in Fig. 8 and Fig. 9 is commonly used to explain detailed processes of interpolation for each direction, steps 701, 702 and 703 in Fig. 7. In this flow chart, character strings between parentheses or slashes, [that is, (C1/C2/C3), where C1, C2 and C3 are arbitrary character strings] are to be interpreted as C1 when step 701 in Fig. 7 is explained, as C2 when step 702 in Fig. 7 is explained and as C3 when step 703 in Fig. 7 is explained, respectively.

Detailed process of the upper to lower interpolation shown as step 701 in Fig. 7 is first explained using the flowchart depicted in Fig 8 and Fig.9 and the explanation shown in Fig. 22.

In the upper to lower interpolation process, the shape calculation portion 110 in Fig. 1 starts to search height image data which have passed height noise elimination process of step 306 in Fig. 4, from the upper end towards the lower end at each horizontal pixel position as shown in Fig. 22(a). The upper contour pixel is determined as the pixel position where the value change in height image data from the background data to the invalid data is detected. The search is continued further downward to detect the value change in height image data from the invalid data value to a valid data value, and the pixel position where this change is detected is determined as the lower contour pixel. The shape calculation portion 110 interpolates data values between the upper contour pixel and the lower contour pixel by using a γ-order curb, only if it detects both of upper and lower contours at each horizontal pixel position of said height image data, as shown in Fig. 22(b).

This process is explained in more detail using the flow chart in Fig. 8 and Fig. 9 as the following. Height image data are stored in an image memory in the personal computer 109 in Fig. 1, although it is not drawn in the figure, as two-dimensional arrayed data. Height image data corresponding to each pixel position can be read out by using a horizontal pointer which determines the horizontal pixel position of the height image and a vertical pointer which determines the vertical pixel position of the height image. The horizontal pointer value is set to zero for the left side pixel position, and it becomes positive for other pixel positions to the right direction. The vertical pointer value is set to zero for the upper side pixel position, and it becomes positive for other pixel positions to the lower direction.

The shape calculation portion 110 first sets the horizontal pointer value to zero (step 801 in Fig.8). This value corresponds to the left side pixel position of the height image, as shown in Fig. 22(a).

Next, the shape calculation portion 110 sets the vertical pointer value to zero which corresponds to the upper side pixel position of the height image as step 802 shown in Fig. 8. Then, shape calculation portion 110 continues iterative search downward by increasing the vertical pointer value by +1 as step 804 in Fig. 8. This search continues until a decision is made by step 803 in Fig. 8 that an invalid data appears, or until a decision is made by step 805 that the search reaches to the lower end pixel position (the loop process 803→804→805→803).

When a decision is made at step 805 in Fig. 8 that the search reaches to the lower end pixel position, the shape calculation portion 110 stops the search at the present horizontal pixel position that is determined by the horizontal pointer value, and moves to the process following step 815 in Fig. 9 for the next horizontal pixel position (step 805 in Fig. 8→step 815 in Fig. 9).

If a decision is made at step 803 in Fig. 8 that the data at the searched pixel is changed from the background data having the value of zero to the invalid data having the value of -32768, the shape calculation portion memorize the present position of the searched pixel as the upper contour pixel, or the pixel that composes the upper contour line in Fig. 22(b) (step 803→806 in Fig. 8).

Then the shape calculation portion 110 further continues iterative search downward by increasing the vertical pointer value by +1 as step 807 in Fig. 8. This search continues until a decision is made by step 808 in Fig. 8 that the search reaches to the lower end pixel position, or until a decision is made by step 809 that invalid data appear (the loop process 807→808→809→807).

When a decision is made at step 808 in Fig. 8 that the search reaches to the lower end pixel position, the shape calculation portion 110 stops the search at the present horizontal pixel position that is determined by the horizontal pointer value, and moves to the process following step 815 in Fig. 9 for the next horizontal pixel position (step 808 in Fig. 8→step 815 in Fig. 9).

If a decision is made at step 809 in Fig. 8 that the searched pixel data is changed from an invalid data having the value of -32768 to a valid data having a positive value larger than zero, the shape calculation portion 110 memorizes the present position of the searched pixel and the data value (step 809→810 in Fig. 8).

The shape calculation portion 110 then increments the vertical pointer value by +1 (step 811 in Fig. 8), and decides whether the searched pixel at this position has also a valid value or not. If this value at the vertical position one pixel lower than the previous position is decided as an invalid value, then the process returns to the search loop following step 808 in Fig. 8 (step 812→808). That is, the valid data value obtained by the previous process is discarded as a noise, since this point can be recognized as an isolated point.

If the searched data value at the vertical position one pixel lower than the previous position is also decided as a valid value, then the larger data value between this value and the valid data value obtained by the previous process is memorized together with its pixel position, as the lower contour pixel, or the pixel that composes the lower contour line in Fig. 22(b) (step 812→813 in Fig. 8).

If both of upper and lower contour pixels are detected at one horizontal pixel position, then the shape calculation portion 110 carries out interpolation for data between the upper contour pixel and the lower contour pixel, using the γ-order curve interpolation technique (step 814 in Fig. 9).

More specifically, the shape calculation portion 110 first sets the data value at the pixel position of the upper contour pixel that is memorized by step 806 in Fig. 8 to a prescribed initial offset value for interpolation. Then it calculates interpolated pixel data values for each pixel in the region, by using the pixel position/data of said upper contour pixel and the pixel position/data of the lower contour pixel. The interpolation is carried out by applying a conventional γ-order curve interpolation method, which is not shown in the figure as it is a well-known technology. Derived interpolation data are stored in the memory with their pixel position data.

Said upper contour data value is set to a non-zero offset value instead of zero, because a three dimensional human profile which is the object to be measured 101 in Fig. 1 can be carved more naturally on precious metal medals, when the embodiment of this invention is applied to such a three dimensional sculpturing apparatus as is shown by 116 in Fig. 1.

If the pixel position interval between the upper contour pixel and the lower contour pixel is smaller than a pre-determined threshold value, the interpolation process is not carried out. Also, If the pixel position under interpolation comes to the lower half area of the height image data, calculation for data interpolation is stopped in order to avoid unnecessary interpolation for the face portion below the hair portion.

As described above, after finishing the interpolation process at the present horizontal direction pixel position, the shape calculation portion 110 increments the horizontal pointer value by +1, so that the horizontal direction pixel position at which the search is carried out is shifted to the right by one pixel (step 815 in Fig. 9).

Next, the shape calculation portion 110 decides whether the new horizontal direction pixel position exceeds the right end pixel position of the height image or not (step 816 in Fig. 9). If the shape calculation portion decides that the new horizontal direction pixel position does not exceed the right end pixel position of the height image, it carries out the series of interpolation processes following step 802 in Fig. 8, at the new horizontal direction pixel position (step 816→step 802 in Fig. 8).

If the shape calculation portion decides that the new horizontal direction pixel position exceeds the right end pixel position of the height image, it finishes the upper to lower direction interpolation process of step 701 in Fig. 7.

As explained above, the upper contour pixel and the lower contour pixel are searched at each horizontal direction pixel position as shown in Fig. 22(b), and when both of them are detected, the γ-order interpolation is carried out between these two contours.

After finishing the upper to lower direction interpolation process of step 701 in Fig.7, the shape calculation portion 110 executes the left to right direction interpolation process of step 702 in Fig. 7.

In the left to right direction interpolation process, the shape calculation portion carries out the following process according to the flow chart in Fig. 8 and Fig. 9, as shown in Fig. 23(a). That is, for the height image of which height noises are already eliminated by step 306 in Fig. 4, the shape calculation portion 110 searches height image data from the left end toward the right end, at each pixel position of the upper half of the height image. When the height image data changes from the background data to the invalid data, the shape calculation portion decides that the pixel is the left side contour pixel. The shape calculation portion continues the search, and when the height image data changes from the invalid data to a valid data, it decides that the pixel is the right side contour pixel. If and only if the shape calculation portion detects both of the left side contour pixel and the right side contour pixel at each pixel position of the upper half of the height image, it calculates interpolated data between the left side contour pixel and the right side contour pixel, by using a γ-order interpolation curve. In the example of Fig. 23, interpolation does not occur because the left side contour pixel cannot be detected at any pixel position in the upper half of the height image.

Since the basic procedure for the left to right direction interpolation process of the flow chart in Fig. 8 and Fig. 9 is just the same as one for the upper to lower direction interpolation process, detailed explanation is not iterated here. It should be only reminded that in the flow chart, character strings between parentheses or slashes, [that is, (C1/C2/C3), where C1, C2 and C3 are arbitrary character strings] are to be interpreted as C2, in this left to right direction interpolation process.

In the left to right direction interpolation process, search for upper and lower contour pixels is carried out only at each pixel position of the upper half of the height image (step 816 in Fig. 9). This is because the forelock portion of the human hair usually exists only in this area. Also, in the actual interpolation process, calculation of interpolated data is not carried out if the interpolation pixel position comes to the right one thirds of the height image data, in order to avoid unnecessary interpolation calculation outside the forelock portion of the human hair.

After finishing the left to right direction interpolation process of step 702 in Fig. 7 as described above, the shape calculation portion 110 then carries out the right to left direction interpolation process of step 703 in Fig. 7.

In the right to left direction interpolation process, the shape calculation portion carries out the following process according to the flow chart in Fig. 8 and Fig. 9, as shown in Fig. 24(a). That is, for the height image of which height noises are already eliminated by step 306 in Fig. 4, the shape calculation portion 110 searches height image data from the right end toward the left end, at each pixel position of the height image. When the height image data changes from the background data to the invalid data, the shape calculation portion decides that the pixel is the right side contour pixel. The shape calculation portion continues the search, and when the height image data changes from the invalid data to a valid data, it decides that the pixel is the left side contour pixel. If and only if the shape calculation portion detects both of the right side contour pixel and the left side contour pixel at each vertical pixel position of the height image, it calculates interpolated data between the right side contour pixel and the left side contour pixel, by using a γ-order interpolation curve. In the example of Fig. 24, interpolation process is carried out at each pixel position in the vertical direction, as shown in Fig. 24(b).

Since the basic procedure for the right to left direction interpolation process of the flow chart in Fig. 8 and Fig. 9 is just the same as one for the upper to lower direction interpolation process, detailed explanation is not iterated here. It should be only reminded that in the flow chart, character strings between parentheses or slashes, [that is, (C1/C2/C3), where C1, C2 and C3 are arbitrary character strings] are to be interpreted as C3, in this right-hand to left-hand direction interpolation process.

In contrast to the case of the left to right direction interpolation process, in the case of the right to left direction interpolation, search for upper and lower contour pixels is carried out at each pixel position of the height image from the upper end to the lower end(step 816 in Fig. 9). This is because the tail portion of the human hair may exist throughout this area.

After finishing the right to left direction interpolation process of step 703 in Fig. 7 as described above, the shape calculation portion 110 then carries out integration of outputs from each direction interpolation process, as step 704 shown in Fig. 7.

In this process, if there exists only one interpolated data output for the height image at each pixel position after three direction interpolation processes of step 701 to 703 in Fig. 7, the shape calculation portion 110 considers this interpolated data as the height image data at that pixel position. If there exist more than two interpolated data outputs for the height image at each pixel position after three direction interpolation processes of step 701 to 703 in Fig. 7, then the shape calculation portion calculates the average of these values and takes it as the height image data at that pixel position. These height image data are composed with height image data before the hair portion interpolation process, and the results become the output of this process. Data averaging between adjacent pixel positions by using a spatial filter can be applied in this process.

One target of this invention to interpolate the three-dimensional missing area in the human hair portion that has a border to the background is thus realized by executing the hair portion interpolation process shown as step 307 in Fig. 4. How large the effect of this interpolation process will be clearly understood when two height images, one in Fig. 26(a) as before the hair portion interpolation, and the other in Fig.26(b) as after the hair portion interpolation, are compared.

**Filling up Process**

Next, the shape calculation portion 110 executes the filling up process on height image data for which the hair portion is interpolated by step 307 in Fig. 4 (step 308 in Fig. 4). In this process, the shape calculation portion 110 detects a hole region which has invalid data and which is surrounded by the region of the object to be measured 101 having positive valid values. The shape calculation portion then fills up such a hole region as was not interpolated during the hair portion interpolation process, and such an invalid data region as was produced during the code noise elimination process or the height noise elimination process, by carrying out similar interpolation processes. These series of processes are illustrated through Fig. 27(a) to Fig. 27(f)

Figure 10 shows a flow chart to explain the filling up process of step 308 in Fig. 4. The shape calculation portion 110 carries out the upper to lower direction interpolation (step 1001), the left to right interpolation (1002), the integration of each direction interpolation result (1003) and the residual operation (step 1004) in this order.

The flow chart shown in Figures 11 and 12 commonly explains the detailed procedure of each direction interpolation process of steps 1001 and 1002 in Fig. 10. In this flow chart, character strings between parentheses or slashes, [that is, (C1/C2), where C1 and C2 are arbitrary character strings] are to be interpreted as C1, in the explanation of step 1001 in Fig. 10, and as C2 in the explanation of step 1002 in Fig.10.

Details of the upper to lower direction interpolation process shown as step 1001 in Fig. 10 will be explained first, by using the flow chart shown in Fig. 11 and 12 and the explanatory figures shown in Fig. 27.

In the upper to lower interpolation process, shape calculation portion 110 in Fig. 1 first searches for the upper hole pixel of height image data which have passed the hair portion interpolation process of step 307 in Fig. 4, starting from the upper end towards the lower end at each horizontal pixel position as shown in Fig. 27(a) and Fig. 27(b). Here, the upper hole pixel means a border pixel position where the height image data changes from a valid data value to the invalid data value. The shape calculation portion continues to search the height image data downward for the lower hole pixel, which is a border pixel position where the height image data changes from the valid data value to the invalid data value. If and only if both of the upper hole pixel and the lower hole pixel are detected, the shape calculation portion linearly interpolates data values between the upper hole pixel and the lower hole pixel, in order to get data values for all pixel positions in the hole region.

Since most of hole regions which require interpolation are relatively small, linear interpolation, instead of γ-order curve interpolation, is sufficient for interpolation in the filling up process.

The filling up process is explained in more detail using the flow chart in Fig. 11 and Fig.129 as the following. Height image data are stored in the image memory in the personal computer 109 in Fig. 1, although not drawn in the figure, as two-dimensional arrayed data. The height image data corresponding to each pixel position can be read out by using a horizontal pointer which determines the horizontal pixel position of the height image and a vertical pointer which determines the vertical pixel position of the height image. The horizontal pointer value is set to zero for the left side pixel position, and it becomes positive for other pixel positions to the right direction. The vertical pointer value is set to zero for the upper side pixel position, and it becomes positive for other pixel positions to the lower direction.

The shape calculation portion 110 first sets the horizontal pointer value to zero (step 1101 in Fig.11).

Next, the shape calculation portion 110 sets the vertical pointer value to zero which corresponds to the upper side pixel position of the height image as step 1102 shown in Fig. 11. Then, the shape calculation portion 110 continues iterative search downward by increasing the vertical pointer value by +1 as step 1104 in Fig. 11. This search continues until a decision is made by step 1103 in Fig. 11 that an invalid data appears, or until a decision is made by step 1105 that the search reaches to the lower end pixel position (the loop process 1103→1104→1105→ 1103).

When a decision is made at step 1105 in Fig.118 that the search reaches to the lower end pixel position, the shape calculation portion 110 stops the search at the present horizontal pixel position that is determined by the horizontal pointer value, and moves to the process following step 1115 in Fig. 11 for the next horizontal pixel position (step 1105 in Fig. 11 → step 1115 in Fig. 11).

If a decision is made at step 1103 in Fig. 11 that the data at the searched pixel is changed from the background data having the value of zero to a valid data having a positive value (the decision result of step 1103 in Fig 11 is "YES"), then the shape calculation portion 110 further continues iterative search downward by increasing the vertical pointer value by +1 as step 1106 in Fig. 11. This search continues until a decision is made by step 1107 in Fig. 11 that the search reaches to the lower end pixel position, or until a decision is made by step 1108 that an invalid data appears (the loop process 1106→1107→1108→1106).

When a decision is made at step 1107 in Fig. 11 that the search reaches to the lower end pixel position, shape calculation portion 110 stops the search at the present horizontal pixel position that is determined by the horizontal pointer value, and moves to the process following step 1115 in Fig. 12 for the next horizontal pixel position (step 1107 in Fig. 11 → step 1115 in Fig. 12).

If a decision is made at step 1108 in Fig. 11 that the searched pixel data is changed from a valid data having a value larger than zero to the invalid data having the value of -32768, the shape calculation portion 110 memorizes the position of one step earlier than the searched pixel and the valid data value at that pixel position (step 1108 → 1109 in Fig. 11).

The shape calculation portion 110 then increments the vertical pointer value by +1 (step 1110 in Fig. 11), in order to repeat the search stepwise by shifting the searched pixel position downward, until the decision is made by step 1111 in Fig. 12 that the searched pixel reached to the lower end pixel, or until the decision is made by step 1112 in Fig. 12 that a valid data having a positive value appeared (loop process 1110→1111→1112→1110 in Fig. 12).

When a decision is made at step 1111 in Fig. 12 that the search reaches to the lower end pixel position, the shape calculation portion 110 stops the search at the present horizontal pixel position that is determined by the horizontal pointer value, and moves to the process following step 1115 in Fig. 12 for the next horizontal pixel position (step 1112 → step 1115).

If a decision is made at step 1112 in Fig. 12 that the data at the searched pixel is changed from the invalid data having the value of -32768 to a valid data having a positive value, the shape calculation portion memorizes the present position of the searched pixel and this valid data as the lower hole pixel (step 1112 → 1113).

If both of upper and lower hole pixels are detected at one horizontal pixel position, then the shape calculation portion 110 carries out interpolation for data at each pixel position between upper hole pixel position/data and lower hole pixel position/data which were memorized at step 1113 in Fig. 12, using the linear interpolation technique (step 1214 in Fig. 12). Derived interpolated data and its pixel position are memorized with their pixel position data (step 1214 in Fig.12).

As described above, after finishing the interpolation process at the present horizontal direction pixel position, shape calculation portion 110 increments the horizontal pointer value by +1, so that the horizontal direction pixel position at which the search is carried out is shifted to the right by one pixel (step 1115 in Fig. 12).

Next, shape calculation portion 110 decides whether the new horizontal direction pixel position exceeds the right end pixel position of the height image or not (step 1116 in Fig. 12). If the shape calculation portion decides that the new horizontal direction pixel position does not exceed the right end pixel position of the height image, it carries out the series of interpolation processes following step 1102 in Fig. 12, at the new horizontal direction pixel position (step 1116→step 1102 in Fig. 12).

If the shape calculation portion decides that the new horizontal direction pixel position exceeds the right end pixel position of the height image, it finishes the upper to lower direction interpolation process of step 1001 in Fig. 10.

As explained above, the upper hole pixel and the lower hole pixel are searched at each horizontal direction pixel position as shown in Fig. 27(b), and when both of them are detected, the linear interpolation is carried out for each pixel position between these pixel positions.

After finishing the upper to lower direction interpolation process of step 1001 in Fig.10, shape calculation portion 110 executes the left to right direction interpolation process of step 1002 in Fig. 107.

In the left to right direction interpolation process, the shape calculation portion carries out the following process according to the flow chart in Fig. 11 and Fig. 12, as shown in Fig. 27(c). That is, for the height image for which the hair portion interpolation process was already carried out by step 307 in Fig. 4, the shape calculation portion 110 searches height image data from the left end toward the right end, at each pixel position in the vertical direction of the height image. When the height image data changes from a valid data value to the invalid data value, the shape calculation portion determines that the border pixel is the left side hole pixel. The shape calculation portion continues the search, and when the height image data changes from the invalid data to valid data, it determines that the border pixel is the right side hole pixel. If and only if the shape calculation portion detects both of the left side hole pixel and the right side hole pixel at each pixel position of the height image, it calculates interpolated data at each pixel position between the left side hole pixel and the right side hole pixel, by using the linear interpolation method.

Since the bask procedure for the left to right direction interpolation process of the flow chart in Fig. 11 and Fig. 12 is just the same as one for the upper to lower direction interpolation process, detailed explanation is not iterated here. It should be only reminded that in the flow chart, character strings between parentheses or slashes, [that is, (C1/C2), where C1 and C2 are arbitrary character strings] are to be interpreted as C2, in this left to right direction interpolation process.

After finishing the left to right direction interpolation process of step 1002 in Fig. 10 as described above, the shape calculation portion 110 then carries out integration of outputs from each direction interpolation process, as step 1003 shown in Fig. 10.

In this process, if and only if there exist both of interpolated data outputs for the height image data at each pixel position after both direction interpolation processes of step 1001 and 1002 in Fig. 10, or in other words, if and only if the pixel position is in a closed hole region, then the shape calculation portion calculates the average of these data values and takes it as the height image data at that pixel position. These height image data are composed with height image data before the filling up process, and the resultant data become the output of this process. Data averaging between adjacent pixel positions by using a spatial filter can be applied in this process.

If there exist no interpolated data for each pixel position of the height image after both direction interpolation process of step 1001 and 1002 in Fig. 10, or in other words, if that pixel position exists in a hole shaped region which is not closed, then the shape calculation portion 110 decides that the pixel data is an error in background 201, changes the data value to the background data of zero compulsorily, and then integrates such resultant data with height image data before the filling up process, in order to produce output data.

Among output data obtained as the output of the interpolation process for each direction interpolation which is denoted as step 1003 in Fig. 10, data for such pixels as having the invalid data value of -32768 are changed to zero compulsorily. Resultant data are then integrated with the output of each direction interpolation process of step 1003 in Fig. 10 to obtain the output height image data.

The filling up process of step 308 in Fig. 4 is thus carried out in order to replace unwanted invalid data regions by valid data regions.

## Offset Correction Process

Next, the shape calculation portion 110 carries out the offset correction process (step 309 in Fig. 4) for height image data after the filling up process of step 304 in Fig. 4.

As already explained for the missing portion extraction process of step 305 in Fig. 4, level cutting in height image data which is a process to set data values for the background region (plus a prescribed offset value) to the valid data value of zero, by subtracting a cutting level value corresponding to the height of the background from the height image data value at each pixel position.

In addition to the above, the offset value which corresponds to the height from the background plane to the nose position of the human profile as the object to be measured is corrected. This offset is generated because of the dead angle in the laser ray scan.

As the actual offset correction process for sculpturing using the three-dimensional sculpturing apparatus 116 in Fig.1, however, the offset level cutting by the value of (height value to the nose - an offset value used for sculpturing) is carried out as shown in Fig. 28 (c). This is because more natural impression can be expected for the result of sculpturing using the three-dimensional sculpturing apparatus 116 in Fig. 1, if a human sculpture is curved a little higher above the medal metal base so that hairs apart from the nose position can also be sculptured on the medal.

Figure 13 shows an operation flow chart explaining detailed processes in the offset correction process of step 308 in Fig. 4.

First, the shape calculation portion 110 displays the height image after the filling up process of step 308 in Fig. 4 and a cursor line on the screen of monitor 1502 (step 1301 in Fig. 13).

Then, an operator fits the cursor line on the screen of monitor 1502 to the nose peak of the height image (step 1302 in Fig. 13).

The shape calculation portion 110 reads height image data one by one at each pixel position on the horizontal line corresponding to the cursor position, and decides that the first detected positive valid data as the nose peak. The shape calculation portion then calculates the average of n height image data, here n is 10 for example, at n pixel positions to the right from the nose peak position, and outputs the averaged value as the height to the nose (step 1303 in Fig. 13).

If the operator selects the normal operation mode, the shape calculation portion 110 subtracts the offset value (height to the nose - offset value used for sculpturing) from height image data at each pixel position after the filling up process of step 308 in Fig. 4 (level cutting). Here, the output of step 1303 is used as the height to the nose (step 1304→1305).

If hairs of the person as the object to be measured 101 are bundled behind the person's head or at the right side of the person's face (at the opposite side of detection head 102), level cutting may be carried out also for height image data of hairs in such a position.

In order to avoid this inconvenience, a special operation mode can be specified in the embodiment of this invention, besides the normal operation mode explained above. When the operator selects this special operation mode, the shape calculation portion 110 linearly compresses valid data for heights lower than the height to the nose, in order that the maximum data value becomes the same as the height to the nose (step 1304→1306).

Then, the shape calculation portion 110 extracts valid data having larger height than the height to the nose (step 1307 in Fig. 13), and subtracts the offset value of (height to the nose - offset value used for sculpturing) from extracted valid data, or in other words, carries out level cutting (step 1307→1305 in Fig. 13).

## Conversion to sculpturing data

Finally, the shape calculation portion 110 converts height image data for which the offset correction process has been carried out as step 309 in Fig. 4 into sculpturing data which three-dimensional sculpturing apparatus 116 in Fig. 1 can handle (step 310 in Fig. 4).

Figure 14 shows an operation flow chart explaining detailed processes of step 310 in Fig. 4.

The shape calculation portion 110 first partitions height image data consisting of 256 x 240 pixels which have passed the offset correction process of step 309 in Fig. 4 into sub portions each of which has 2 x 2 pixels. Here, each height image data is expressed as a 2byte data with a sign. The shape calculation portion calculates the average data value for four pixels in each sub portion to obtain the output (step 1401 in Fig. 14). Height image data having 256 x 240 pixels are thus compressed to one having 128 x 120 pixels.

Next, the shape calculation portion 110 normalizes (or, in other words, compresses linearly) 128 x 120 of height image data obtained by the above step, in order that the maximum value of these data becomes to an appropriate value such as 114 (step 1402 in Fig. 14). This number, 114 in the above example, corresponds to the resolution along the z axis (in the depth direction) of the three-dimensional sculpturing apparatus 116 at its operation, so that it is actually determined according to the ability of the three-dimensional sculpturing apparatus 116.

Next, the shape calculation portion 110 sets height image data corresponding to the left end pixel position and the right end pixel position among said normalized 128 x 120 height image data to zero (step 1403 in Fig. 14).

Then the shape calculation portion 110 converts each of said 128 x 120 height image data into a differential value of two data for pixels adjacent each other in the form of one byte data with a sign (step 1404 in Fig. 14).

The shape calculation portion then calculates the check sum for above mentioned 128 x 120 differential height image data, and adds the resulting check sum code of one byte data to said differential height image data (step 1405 in Fig 14).

Finally, the shape calculation portion 110 outputs resultant data, that is, 128 x 120 differential height image data plus one byte check sum code, as shape data 115 for three-dimensional sculpturing apparatus 116.

As described above, the three-dimensional sculpturing apparatus 116 can curve a particularly natural three-dimensional human sculpture on a precious metal medal, by using shape data 115 which are properly interpolated missing three-dimensional shapes of human hair portions especially having their borders to the background.

## Different embodiment of the invention

Although above described embodiment is applied to a system having a structure of the three-dimensional sculpturing apparatus 116 for curving a three-dimensional human profile on precious metal medals, the application of this invention is not restricted to such a purpose, but it can also be applied to manufacturing moulds for sculpturing a three-dimensional human profile on plastic emblems, to sculpturing on woodcrafts, or to all other applications of this kind.

Applications of this invention are not limited to three-dimensional sculpturing systems, but also can be applied to such systems as displaying or printing three-dimensional measurement results for the object to be measured 101.

Also this invention is not limited to the technology for deriving contour information of a missing portion by using a backboard. That is, a missing portion can be reproduced from the three-dimensional shape measured without using a backboard, by recovering information of contour positions which overlap the missing portion by applying a curve approximation method. The missing portion can be also reproduced by another method such as selecting appropriate contours from pre-stored many different contour examples for human profiles and applying such selected contours for re-production of the missing portion.

Three-dimensional shape measuring methods of this invention are neither limited to ones such use irradiation of slit laser rays from left and right sources, nor limited to ones such use a laser ray.

It will not need to say that the missing portion in the application of this invention is not necessarily the human hair portion.

## Supplement on recording media for programs which realize the embodiment of this invention

When this invention is realized by a computer, functions which are embodied by each component of the above described embodiment of this invention can be realized as a program stored in a recording medium of which contents can be read by a computer.

In such a case, programs which realize functions of the embodiment of this invention are read out directly from a portable recording media such as a floppy disk, a CD-ROM disk, an MO-disk or a removable hard disk, or transmitted via a communication network. Such programs are stored into the memory of the computer such as a RAM or a hard disk for execution.

## *FEASIBILITY OF INDUSTRIAL APPLICATIONS*

As described hereinbefore, by the three-dimensional shape measuring apparatus of this invention and the three-dimensional sculpturing apparatus using said three-dimensional shape measuring apparatus, the border information or the contour information between the human profile and the like to be measured and the background region can be derived precisely. And also the missing three-dimensional shape of the human hair portion and the like that has a border to the background can be complemented based on the derived border information or the contour information.

More specifically, it becomes possible to derive easily the background border missing area that consists of pixels having invalid data, by measuring the three-dimensional shape of an object to be measured such as a human profile and the like together with a backboard which is placed behind said object and which can reflect a slit laser ray. Here, said background border missing area is surrounded by the background area having background pixel data for the backboard and by the valid measured object area having valid pixel data for the object to be measured. Consequently, easy interpolation of pixels composing the derived background border missing area becomes possible.

It becomes thus possible to obtain natural carving results on a precious metal medal or the like for the object to be measured such as a human profile or the like, when such three-dimensional data complemented as explained above are applied to a three dimensional sculpturing apparatus system.

## Claims

1. A three-dimensional measuring apparatus having three-dimensional shape measuring functionality and containing (1) a background border obtaining unit which obtains background border information showing the border between an object to be measured and the background of said object, from three-dimensional shape data showing the three-dimensional shape of the object to be measured, and (2) an interpolation calculation unit which complements the missing portion of the measured object information in said three-dimensional shape data, from the derived background border information.

2. A three-dimensional measuring apparatus having three-dimensional shape measuring functionality and containing (1) a measuring unit which measures the three-dimensional shape of an object to be measured, together with the three-dimensional shape of a backboard to which said object to be measured is placed near and which has such characteristics that its three-dimensional shape can be measured, (2) a background border missing area deriving unit which derives from measured three-dimensional object shape data a background border missing area which consists of pixels having invalid value data, and which is surrounded by a background area consisting of pixels having background data corresponding to said backboard and which is surrounded by a valid measured object area consisting of pixels having valid data of said object to be measured, and (3) a background border missing area interpolation calculation unit which complements pixels composing said derived background border missing area, from pixels composing the background area that surrounds said derived background border missing area and from pixels composing said valid measured object area that surrounds said derived background border missing area.

3. An apparatus as claimed in Claim 2 where said background border missing area deriving unit is characterized as; it searches the image expressed by said measured three-dimensional object shape data from the upper end towards the lower end at each horizontal pixel position and derives upper contour pixels as pixels where values of said three-dimensional object shape data change from said background data value to said invalid data value, it further searches the image downward from the upper contour pixels and derives lower contour pixels as pixels where values of said three-dimensional object shape data change from said invalid data value to said valid data value, and then it interpolates pixel data between said upper contour pixels and said lower contour pixels by using a prescribed interpolation method if and only if it detects both of upper and lower contours, in order that the interpolated data value at each pixel in the region can be obtained.

4. An apparatus as claimed in either one of claim 2 or claim 3 where said background border missing area deriving unit is characterized as; it searches the image expressed by said measured three-dimensional object shape data from the left end towards the right end at each vertical pixel position and derives left side contour pixels as pixels where the values of said three-dimensional object shape data change from said background data value to said invalid data value, it further searches the image to the right from the left side contour pixels and derives right side contour pixels as pixels where values of said three-dimensional object shape data change from said invalid data value to said valid data value, and then it interpolates pixel data between said left side contour pixels and said right side contour pixels by using a prescribed interpolation method if and only if it detects both of left and right side contours, in order that interpolated data value at each pixel in the region can be obtained.

5. An apparatus as claimed in either one of claim 2 or claim3 where said background border missing area deriving unit is characterized as; it searches the image expressed by said measured three-dimensional object shape data from the right end towards the left end at each vertical pixel position and derives right side contour pixels as pixels where the values of said three-dimensional object shape data change from said background data value to said invalid data value, it further searches the image to the left from the right side contour pixels and derives left side contour pixels as pixels where values of said three-dimensional object shape data change from said invalid data value to said valid data value, and then it interpolates pixel data between said right side contour pixels and said left side contour pixels by using a prescribed interpolation method if and only if it detects both of right and left side contours, in order to get the interpolated data value at each pixel in the region.

6. An apparatus as claimed in either one of claim 2 or claim3 where said apparatus further contains a hole-shaped missing area deriving unit that derives from said three-dimensional object shape data a hole-shaped missing area which consists of pixels having an invalid data value and which is surrounded by said valid measured object area consisting of pixels having valid data of said object to be measured, and a hole-shaped missing area interpolation calculation unit which interpolates pixels composing said and derived hole-shaped missing area from pixels composing said valid measured object area that surrounds said and derived hole-shaped missing area.

7. A three-dimensional sculpturing apparatus using a three dimensional shape measuring apparatus claimed in either one of claim 2 or claim3 where said three-dimensional sculpturing apparatus inputs said three-dimensional object shape data after interpolation of pixels consisting of said background border missing area or said hole-shaped missing area, and controls a sculpturing unit based on the input of said three-dimensional object data.

8. A computer readable recording medium in which programs are recorded and said programs are read by a computer having three-dimensional shape measuring functionality, where said programs make said computer execute functions of; (1) obtaining background border information showing the border between an object to be measured and the background of said object, from three-dimensional shape data showing three-dimensional shape of said object to be measured, and (2) complementing a missing portion of the measured object information in said three-dimensional shape data, from the derived background border information.

9. A computer readable recording medium in which programs are recorded and said programs are read by a computer having three-dimensional shape measuring functionality, where said programs make said computer execute the functions of;

(1)
measuring the three-dimensional shape of an object to be measured together with the three-dimensional shape of a backboard to which said object to be measured is placed near and which has such characteristics that its three-dimensional shape can be measured, (2) deriving from measured three-dimensional object shape data a background border missing area which consists of pixels having invalid value data, and which is surrounded by a background area consisting of pixels having background data corresponding to said backboard and which is surrounded by a valid measured object area consisting of pixels having valid data of said object to be measured, and (3) complementing pixels composing said background border missing area, from pixels composing the background area that surrounds said background border missing area and from pixels composing said valid measured object area that surrounds said background border missing area.

Fig. 1

Three-Dimensional Sculpturing Apparatus 116

115

109 Personal Computer

110 Shape Calculation Portion

108 Control Signal

107 Image Encoder

114 Control Signal

Turning Stage Controller 113

112 Control Signal

Laser Controller 111

106

102

103 104

105

104 103

101

# F i g . 2

201

101

102

Head

Virtual Plane

# Fig. 3

```
        ┌──────────────┐
        │    START     │
        └──────┬───────┘
               │
               ▼
┌────────────────────────────────┐
│         Measurement            │────301
└────────────────┬───────────────┘
                 │
                 ▼
┌────────────────────────────────┐
│ Conversion from left side measured data │
│ to left side height data       │────302
└────────────────┬───────────────┘
                 │
                 ▼
┌────────────────────────────────┐
│ Conversion from right side measured data │
│ to right side height data      │────303
└────────────────┬───────────────┘
                 │
                 ▼
┌────────────────────────────────┐
│ Integration of left side and right side │
│ height data                    │────304
└────────────────┬───────────────┘
                 │
                 ▼
              (  *  )
```

F i g .  4

```
            ╭───╮
            │ * │
            ╰─┬─╯
              │
              ▼
  ┌─────────────────────────┐
  │ Missing portion extraction│──305
  └─────────────────────────┘
              │
              ▼
  ┌─────────────────────────┐
  │ Height noise elimination │──306
  └─────────────────────────┘
              │
              ▼
  ┌─────────────────────────┐
  │ Hair portion interpolation│──307
  └─────────────────────────┘
              │
              ▼
  ┌─────────────────────────┐
  │       Filling up        │──308
  └─────────────────────────┘
              │
              ▼
  ┌─────────────────────────┐
  │     Offset correction   │──309
  └─────────────────────────┘
              │
              ▼
  ┌─────────────────────────┐
  │ Conversion to sculpturing data│──310
  └─────────────────────────┘
              │
              ▼
          ╭─────────╮
          │   End   │
          ╰─────────╯
```

F i g . 5

```
          ┌─────────────┐
          │    Start     │
          └──────┬──────┘
                 │
                 ▼
    ┌───────────────────────────┐
    │ Generation of masking image│──── 501
    └─────────────┬─────────────┘
                  │
                  ▼
    ┌───────────────────────────┐
    │          Masking           │──── 502
    └─────────────┬─────────────┘
                  │
                  ▼
    ┌───────────────────────────┐
    │  Elimination of code noise │──── 503
    └─────────────┬─────────────┘
                  │
                  ▼
    ┌───────────────────────────┐
    │ Conversion to height image data│──── 504
    └─────────────┬─────────────┘
                  │
                  ▼
          ┌─────────────┐
          │    Return    │
          └─────────────┘
```

F i g . 6

```
        ┌─────────────────┐
        │      Start       │
        └─────────────────┘
                 │
                 ▼
   ┌──────────────────────────┐
   │  Cut level derivation     │──601
   │  from the backgroundportion│
   └──────────────────────────┘
                 │
                 ▼
   ┌──────────────────────────┐
   │      Level cutting        │──602
   └──────────────────────────┘
                 │
                 ▼
        ┌─────────────────┐
        │     Return       │
        └─────────────────┘
```

$$F \ i \ g \ . \quad 7$$

```
          ┌─────────────────┐
          │      Start       │
          └─────────────────┘
                   │
                   ▼
┌───────────────────────────────────────┐
│ Upper to lower direction interpolation │──701
└───────────────────────────────────────┘
                   │
                   ▼
┌───────────────────────────────────────┐
│ Left to right direction interpolation  │──702
└───────────────────────────────────────┘
                   │
                   ▼
┌───────────────────────────────────────┐
│ Right to left direction interpolation  │──703
└───────────────────────────────────────┘
                   │
                   ▼
┌───────────────────────────────────────┐
│ Integlation of each direction          │──704
│ interpolation result                   │
└───────────────────────────────────────┘
                   │
                   ▼
          ┌─────────────────┐
          │     Return       │
          └─────────────────┘
```

# Fig. 8

```
                    ┌─────────────┐
                    │    Start    │
                    └─────────────┘
                           ↓
┌──────────────────────────────────────────────────────────────┐
│ Set (horizontal/vertical/vertical) pointer to (left end/upper │── 801
│ end/upper end)                                                 │
└──────────────────────────────────────────────────────────────┘
      (c) ──────────────────────→
                           ↓
┌──────────────────────────────────────────────────────────────┐
│ Set (vertical/horizontal/horizontal) pointer to (upper end/   │── 802
│ left end/right end)                                            │
└──────────────────────────────────────────────────────────────┘
                           ↓
       803                                              804
          ◇ Invalid data?  ──── NO ────→
                  │                  ┌──────────────────────────────┐
                 YES                 │ Increment vertical/horizontal/│
                  │                  │ horizontal by (+1/+1/-1)      │
   806            ↓                  └──────────────────────────────┘
┌──────────────────────────────────────────────────────┐   805
│ Memorize present searched pixel as (upper/left/right)  │
│ contour pixel                                          │  ◇ (Lower end/right
└──────────────────────────────────────────────────────┘     end/left end)? ── NO
                    807
                  ↓
┌──────────────────────────────────────────────────────┐   YES
│ Increment (vertical/horizontal/horizontal) pointer by  │
│ (+1/+1/-1)                                             │
└──────────────────────────────────────────────────────┘
                  ↓        808
          ◇ (Lower end/right end/left end)?  ── YES ──→
                  │ NO          809                      (b)
          ◇ Valid data?  ── NO
                  │ YES
┌──────────────────────────────────────────────────────┐
│ Memorize the valid data                                │── 810
└──────────────────────────────────────────────────────┘
                  ↓
┌──────────────────────────────────────────────────────┐
│ Increment (vertical/horizontal/horizontal) pointer by  │── 811
│ (+1/+1/-1)                                             │
└──────────────────────────────────────────────────────┘
                  ↓        812
          ◇ Valid data?  ── NO
                  │ YES
                  ↓
                 (a)
```

Fig. 9

(a)

Memorize the larger data value between the valid
pixel data value memorized in step 810 and the
present data value, as the (lower/right/left)
contour pixel data — 813

γ-curve interpolation between (upper/left/right)
contour pixel and (lower/right/left) contour pixel — 814

← (b)

Increment (horizontal/vertical/vertical) pointer by +1 — 815

816

(c) ← NO ◇ Exceeded (right end/upper
or lower center/left end)?

YES

( Return )

# F i g .  1 0

```
        ┌─────────────┐
        │    Start    │
        └──────┬──────┘
               │
               ▼
   ┌────────────────────────┐
   │ Upper to lower direction│──── 1001
   │ interpolation          │
   └────────────┬───────────┘
                │
                ▼
   ┌────────────────────────┐
   │ Left to right direction │──── 1002
   │ interpolation          │
   └────────────┬───────────┘
                │
                ▼
   ┌────────────────────────┐
   │     Integration        │──── 1003
   └────────────┬───────────┘
                │
                ▼
   ┌────────────────────────┐
   │   Residual operation   │──── 1004
   └────────────┬───────────┘
                │
                ▼
        ┌─────────────┐
        │   Return    │
        └─────────────┘
```

# Fig. 11

```
                        ┌──────────┐
                        │  Start   │
                        └────┬─────┘
                             ▼
┌─────────────────────────────────────────────────────────┐
│ Set (horizontal/vertical) pointer to the (left/upper) end position │ ── 1101
└─────────────────────────────────────────────────────────┘
   (c) ─────────────────────►
                             ▼
┌─────────────────────────────────────────────────────────┐
│ Set (vertical/horizontal) pointer to the (upper/left) end position │ ── 1102
└─────────────────────────────────────────────────────────┘

  1103              ◇ Valid data?  ─── NO ──►
                        │ YES        ┌───────────────────────────────┐  1104
                        │            │ Increment (vertival/horizontal) pointer by +1 │
                        │            └───────────────────────────────┘
                        │                      │                      1105
                        │                      ▼  ◇ (lower/right) end? ─ NO
                        │                         │ YES
  1106                  ▼
        ┌───────────────────────────────────────┐
        │ Increment (vertical/horizontal) pointer by +1 │
        └───────────────────────────────────────┘
                        │    1107
                        ▼ ◇ (lower/right) end? ── YES ──►
                        │ NO    1108                        (b)
        NO ───── ◇ Invalid data?
                        │ YES
┌─────────────────────────────────────────────────────────┐
│ Memorize the pixel data just before the present searched pixel │ ── 1109
│ data as the (upper/left sede) hole pixel data                  │
└─────────────────────────────────────────────────────────┘
                        ▼
                       (a)
```

# F i g .  1 2

(a)

(b)

Increment (vertical/horizontal) pointer by +1    1110

(lower/right side) end?    1111    YES

NO    1112

Valid data?

NO

YES

Memorize the present searched pixel data
as the (lower/right side) hole pixel data    1113

Linearly interpolate between (upper/left side) hole pixel data
and (lower/right side) hole pixel data    1114

Increment (horizontal/vertical) pointer by +1

1116    1115

(c)    NO    Exceed (right side
/lower) end?

YES

Return

Fig. 13

```
                    ┌─────────────────┐
                    │      Start      │
                    └─────────────────┘
                             │
                             ▼
        ┌──────────────────────────────────────┐
        │  Display of measured height Image     │──── 1301
        │  and a cursor line                    │
        └──────────────────────────────────────┘
                             │
                             ▼
        ┌──────────────────────────────────────┐
        │  Set cursor line to the nose peak     │──── 1302
        └──────────────────────────────────────┘
                             │
                             ▼
        ┌──────────────────────────────────────┐
        │  Calculation of height to the nose    │──── 1303
        └──────────────────────────────────────┘
                             │
   1304                      │
      \                      ▼                    Special mode        1306
       \          ◇─────────────────────◇ ──────────────────────┐      \
        ───────── ◇       Mode?          ◇                       ▼
                  ◇─────────────────────◇         ┌──────────────────────────┐
          Normal mode     │                       │  Linear compression of   │
                          │                       │  data for farther from   │
                          │                       │  nose                    │
                          │                       └──────────────────────────┘
                          │                                    │      1307
                          │                                    ▼       /
                          │                       ┌──────────────────────────┐
                          │                       │ Extraction of data for    │
                          │                       │ nearer to the nose        │
                          │                       └──────────────────────────┘
   1305                   │                                    │
      \                   ▼◄──────────────────────────────────┘
       \     ┌──────────────────────────────────────┐
        ──── │ Level cutting of (height to the       │
             │ nose-offset for sculpturing           │
             └──────────────────────────────────────┘
                             │
                             ▼
                    ┌─────────────────┐
                    │     Return      │
                    └─────────────────┘
```

## Fig. 14

```
        ┌─────────────┐
        │    Start    │
        └──────┬──────┘
               │
               ▼
┌──────────────────────────────┐
│ Compression from 256×240 pixels │──── 1401
│ to 128×120 pixels              │
└──────────────┬───────────────┘
               │
               ▼
┌──────────────────────────────┐
│ Normalization of height image data │──1402
└──────────────┬───────────────┘
               │
               ▼
┌──────────────────────────────┐
│ Set lerft end pixel data      │──── 1403
│ and right end pixel data to zero │
└──────────────┬───────────────┘
               │
               ▼
┌──────────────────────────────┐
│ Conversion to differential image data │──1404
└──────────────┬───────────────┘
               │
               ▼
┌──────────────────────────────┐
│ Addition of check sum code    │──── 1405
└──────────────┬───────────────┘
               │
               ▼
┌──────────────────────────────┐
│ Output of 128×120+1 byte data │──── 1406
└──────────────┬───────────────┘
               │
               ▼
        ┌─────────────┐
        │   Return    │
        └─────────────┘
```

# Fig. 15

The laser ray angle code image data 1501

Shape data 115

$$f(x,y) = Z_0 - (X_0 - X) \times \tan\theta(x,y)$$

# Fig. 16

Original Data(Left)

Maximum Brightness Image

Minimum Brightness Image

(a)

Masking Image

Code Image

(b)

Code Image after Masking

(c)

Code Image after Noise Elimination

# Fig. 17

(d)

Left Side Height Image

Right Side Height Image

(e)

Height Image after Integration

(f)

Height Image after Noise Elimination

F i g. 1 8

| | | |
|---|---|---|
| $a_4$ | $a_3$ | $a_2$ |
| $a_5$ | $a_0$ | $a_1$ |
| $a_6$ | $a_7$ | $a_8$ |

(a)

| | | |
|---|---|---|
| | $a_3$ | |
| $a_5$ | $a_0$ | $a_1$ |
| | $a_7$ | |

(b)

Fig. 19

201

Virtual Plane

101

102

Head

Cutting Level

Delete data for the portion

deeper than the cutting level

Fig. 20

(a)

Background Data (Backboard data)

Invalid data

Valid data

(b)

Fig. 21

| | | | | |
|---|---|---|---|---|
| $a_4$ | | $a_3$ | | $a_2$ |
| | | | | |
| $a_5$ | | $a_0$ | | $a_1$ |
| | | | | |
| $a_6$ | | $a_7$ | | $a_8$ |

# F i g .  2 2

(a)

(b)

Fig. 23

(a)

(b)

Fig. 24

(a)

(b)

# Fig. 25

A-A Cross Section

(Lower/Right Side/Left Side) Contour Pixel

Interpolated Portion by γ-order Curve

Valid Data

Invalid Data

Background Data

(Upper/Left Side/Right Side)Contour Pixel

Initial Offset Value for Interpolation

EP 0 962 745 A1

# Fig. 26

(a) Before Hair Portion Interpolation

(b) After Hair Portion Interpolation

Fig. 27

(a)

(f)

Hole

(b)

(e)

(c)

(d)

Fig. 28

(a)  (b)  (c)

## INTERNATIONAL SEARCH REPORT

| International application No. |
| --- |
| PCT/JP98/04313 |

**A. CLASSIFICATION OF SUBJECT MATTER**
Int.Cl⁶ G01B11/24, B24B17/06

According to International Patent Classification (IPC) or to both national classification and IPC

**B. FIELDS SEARCHED**

Minimum documentation searched (classification system followed by classification symbols)
Int.Cl⁶ G01B11/24, B24B17/06

Documentation searched other than minimum documentation to the extent that such documents are included in the fields searched

| | | | |
| --- | --- | --- | --- |
| Jitsuyo Shinan Koho | 1992–1996 | Toroku Jitsuyo Shinan Koho | 1994–1998 |
| Kokai Jitsuyo Shinan Koho | 1971–1998 | Jitsuyo Shinan Toroku Koho | 1996–1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 61-162706, A (Hitachi Zosen Corp.), 23 July, 1986 (23. 07. 86), Full text ; Figs. 1 to 8 (Family: none) | 1-7 |
| A | JP, 3-138507, A (Kobe Steel Ltd., Koberuko Shisutemu K.K.), 12 June, 1991 (12. 06. 91), Full text ; Figs. 1 to 4 (Family: none) | 1-7 |
| A | JP, 3-138508, A (Kobe Steer Ltd., Koberuko Shisutemu K.K.), 12 June, 1991 (12. 06. 91), Full text ; Figs. 1 to 10 (Family: none) | 1-7 |
| A | JP, 4-42010, A (Koberuko Shisutemu K.K., Kobe Steel Ltd.), 12 February, 1992 (12. 02. 92), Full text ; Figs. 1 to 5 (Family: none) | 1-7 |

☐ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 25 November, 1998 (25. 11. 98) | 8 December, 1998 (08. 12. 98) |

| Name and mailing address of the ISA/ | Authorized officer |
| --- | --- |
| Japanese Patent Office | |
| Facsimile No. | Telephone No. |

Form PCT/ISA/210 (second sheet) (July 1992)